(19) Europäisches Patentamt / European Patent Office / Office européen des brevets

(11) **EP 4 503 697 A1**

(12) **EUROPEAN PATENT APPLICATION**
published in accordance with Art. 153(4) EPC

(43) Date of publication:
**05.02.2025 Bulletin 2025/06**

(21) Application number: **22935271.1**

(22) Date of filing: **30.03.2022**

(51) International Patent Classification (IPC):
**H04W 16/28** (2009.01)    **H04W 72/04** (2023.01)

(52) Cooperative Patent Classification (CPC):
**H04W 16/28; H04W 72/04**

(86) International application number:
**PCT/JP2022/016045**

(87) International publication number:
**WO 2023/188125 (05.10.2023 Gazette 2023/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **SHIBAIKE, Naoya**
**Tokyo 100-6150 (JP)**

• **MATSUMURA, Yuki**
**Tokyo 100-6150 (JP)**
• **NAGATA, Satoshi**
**Tokyo 100-6150 (JP)**
• **WANG, Jing**
**Beijing 100190 (CN)**
• **SUN, Weiqi**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes a receiving section that receives a configuration indicating more than four sounding reference signal (SRS) ports, and a control section that controls transmission of an SRS, using the more than four SRS ports. According to one aspect of the present disclosure, transmission of an SRS using more than four SRS ports can be appropriately performed.

FIG. 15A

| $N_{ap}^{SRS}$ | $K_{TC}(n_{SRS}^{CS,max})$ | $n_{SRS}^{CS,i}$ |
|---|---|---|
| 6 | 2 (8) | $n_{SRS}^{CS}, (n_{SRS}^{CS} + 2)\ mod\ 8, (n_{SRS}^{CS} + 4)\ mod\ 8, (n_{SRS}^{CS} + 6)\ mod\ 8$ |
| 6 | 4 (12) | $n_{SRS}^{CS}, (n_{SRS}^{CS} + 2)\ mod\ 12, (n_{SRS}^{CS} + 4)\ mod\ 12, (n_{SRS}^{CS} + 6)\ mod\ 12, (n_{SRS}^{CS} + 8)\ mod\ 12, (n_{SRS}^{CS} + 10)\ mod\ 12$ |
| 6 | 8 (6) | $n_{SRS}^{CS}, (n_{SRS}^{CS} + 1)\ mod\ 6, (n_{SRS}^{CS} + 2)\ mod\ 6, (n_{SRS}^{CS} + 3)\ mod\ 6, (n_{SRS}^{CS} + 4)\ mod\ 6, (n_{SRS}^{CS} + 5)\ mod\ 6$ |

**(Cont. next page)**

EP 4 503 697 A1

FIG. 15B

(a)             (b)             (c)

Port#0-#5

Port#0-#2

Port#3-#5

Port#0-#2

Port#3-#5

FREQUENCY

TIME

## Description

Technical Field

The present disclosure relates to a terminal, a radio communication method, and a base station in next-generation mobile communication systems.

Background Art

For a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In 3GPP Rel. 15/16, a maximum number of UL layers is 4, and a maximum number of sounding reference signal (SRS) ports is also 4. Thus, UL transmission is implemented using simple relationships between the layers and the uplink (UL) channel/signal (PUSCH/SRS) ports.

For future radio communication systems (for example, 3GPP Rel. 18 or later versions), it has been under study that more than four layers are supported in UL transmission. However, whether to support SRS ports having more than four ports, various configurations in a case of support thereof, and the like have not been made clear. Consequently, transmission of an SRS using more than four SRS ports may not be appropriately performed.

In view of this, the present disclosure has one object to provide a terminal, a radio communication method, and a base station that enable transmission of an SRS using more than four SRS ports to be appropriately performed.

Solution to Problem

A terminal according to one aspect of the present disclosure includes a receiving section that receives a configuration indicating more than four sounding reference signal (SRS) ports, and a control section that controls transmission of an SRS, using the more than four SRS ports.

Advantageous Effects of Invention

According to one aspect of the present disclosure, transmission of an SRS using more than four SRS ports can be appropriately performed.

Brief Description of Drawings

[FIG. 1] FIG. 1 is a diagram to show an example of an SRS resource set configuration information element.
[FIG. 2] FIG. 2 is a diagram to show an example of an SRS resource configuration information element.
[FIG. 3] FIG. 3 shows an example of bands for SRS frequency hopping.
[FIG. 4] FIG. 4 shows an example of SRS frequency hopping.

[FIG. 5] FIG. 5 shows another example of SRS frequency hopping.

[FIG. 6] FIG. 6 shows an example of an RPFS SRS.

[FIG. 7] FIG. 7 shows an example of partial bands of the RPFS SRS.

[FIG. 8] FIG. 8 is a table to show a relationship between a number of transmission comb $K_{TC}$ and a maximum number of cyclic shifts of an SRS $n_{SRS}^{CS,max}$ in Rel. 16.

[FIG. 9] FIG. 9 is a table to show the number of transmission comb $K_{TC}$ and a cyclic shift value of the SRS $n_{SRS}^{CS,i}$ when the number of SRS ports $N_{ap}^{SRS}$ is 2.

[FIG. 10] FIG. 10 is a table to show the number of transmission comb $K_{TC}$ and the cyclic shift value of the SRS $n_{SRS}^{CS,i}$ when the number of SRS ports $N_{ap}^{SRS}$ is 4.

[FIG. 11] FIG. 11 is a diagram to show a resource start position $k_{TC}^{p\_i}$ in a frequency direction when the number of SRS ports $N_{ap}^{SRS}$ is 2.

[FIG. 12] FIG. 12 is a diagram to show a resource start position $k_0^{p\_i}$ in the frequency direction when the number of SRS ports $N_{ap}^{SRS}$ is 4.

[FIG. 13] FIG. 13 is a diagram to show SRS allocation in each port when the number of transmission comb is 4.

[FIG. 14] FIG. 14 is a diagram to show SRS allocation in each port when the number of transmission comb is 2.

[FIG. 15] FIG. 15A is a table to show the number of transmission comb $K_{TC}$ and the cyclic shift value of the SRS $n_{SRS}^{CS,i}$ when the number of SRS ports $N_{ap}^{SRS}$ is 6. FIG. 15B is a diagram to show an example of SRS resource allocation, which corresponds to FIG. 15A.

[FIG. 16] FIG. 16A is a table to show the number of transmission comb $K_{TC}$ and the cyclic shift value of the SRS $n_{SRS}^{CS,i}$ when the number of SRS ports $N_{ap}^{SRS}$ is 8. FIG. 16B is a diagram to show an example of SRS resource allocation, which corresponds to FIG. 16A.

[FIG. 17] FIG. 17 is a table to show the number of transmission comb $K_{TC}$ and the cyclic shift value of the SRS $n_{SRS}^{CS,i}$ when the number of SRS ports $N_{ap}^{SRS}$ is 6 or 8.

[FIG. 18] FIG. 18 is a table to show the cyclic shift value $n_{SRS}^{CS,i}$ in option 2-1 of a second aspect.

[FIG. 19] FIG. 19 is a first table to show the cyclic shift value $n_{SRS}^{CS,i}$ in option 2-2 of the second aspect.

[FIG. 20] FIG. 20 is a second table to show the cyclic shift value $n_{SRS}^{CS,i}$ in option 2-2 of the second aspect.

[FIG. 21] FIG. 21 is a diagram to show SRS allocation in each port when the number of transmission comb is 2.

[FIG. 22] FIG. 22 is a diagram to show SRS allocation in aspect 2-3.

[FIG. 23] FIG. 23 is a diagram to show SRS allocation in each port when the number of transmission comb is 4.

[FIG. 24] FIG. 24 is a diagram to show a first example of SRS allocation in aspect 2-5.

[FIG. 25] FIG. 25 is a diagram to show a second example of SRS allocation in aspect 2-5.

[FIG. 26] FIG. 26 is a diagram to show a first example of SRS allocation in aspect 2-6.

[FIG. 27] FIG. 27 is a diagram to show a second example of SRS allocation in aspect 2-6.

[FIG. 28] FIG. 28 is a diagram to show an example in which the number of SRS ports is 8 and the SRS is allocated to two symbols.

[FIG. 29] FIG. 29A and FIG. 29B are diagrams to show examples of a relationship between TD-OCC indexes and codes of a TD-OCC.

[FIG. 30] FIG. 30 is a diagram to show an example of a schematic structure of a radio communication system according to one embodiment.

[FIG. 31] FIG. 31 is a diagram to show an example of a structure of a base station according to one embodiment.

[FIG. 32] FIG. 32 is a diagram to show an example of a structure of a user terminal according to one embodiment.

[FIG. 33] FIG. 33 is a diagram to show an example of a hardware structure of the base station and the user terminal according to one embodiment.

[FIG. 34] FIG. 34 is a diagram to show an example of a vehicle according to one embodiment.

Description of Embodiments

(SRS)

In NR, there are various usages of a reference signal for measurement (Sounding Reference Signal (SRS)). The SRS in NR is used not only for uplink (UL) CSI measurement that is used in existing LTE (LTE Rel. 8 to Rel. 14) as well, but is also used for downlink (DL) CSI measurement, beam management, and the like.

A UE may be configured with one or a plurality of SRS resources. Each SRS resource may be identified with an SRS resource index (SRI).

Each SRS resource may include one or a plurality of SRS ports (may correspond to one or a plurality of SRS ports). For example, the number of ports for each SRS may be 1, 2, 4, or the like.

The UE may be configured with one or a plurality of SRS resource sets. One SRS resource set may be related to a certain number of SRS resources. The UE may use a common higher layer parameter for the SRS resources included in one SRS resource set. Note that the resource set in the present disclosure may be interpreted as a set, a resource group, a group, or the like.

Information related to the SRS resource or the resource set may be configured for the UE by higher layer signaling, physical layer signaling, or a combination of these.

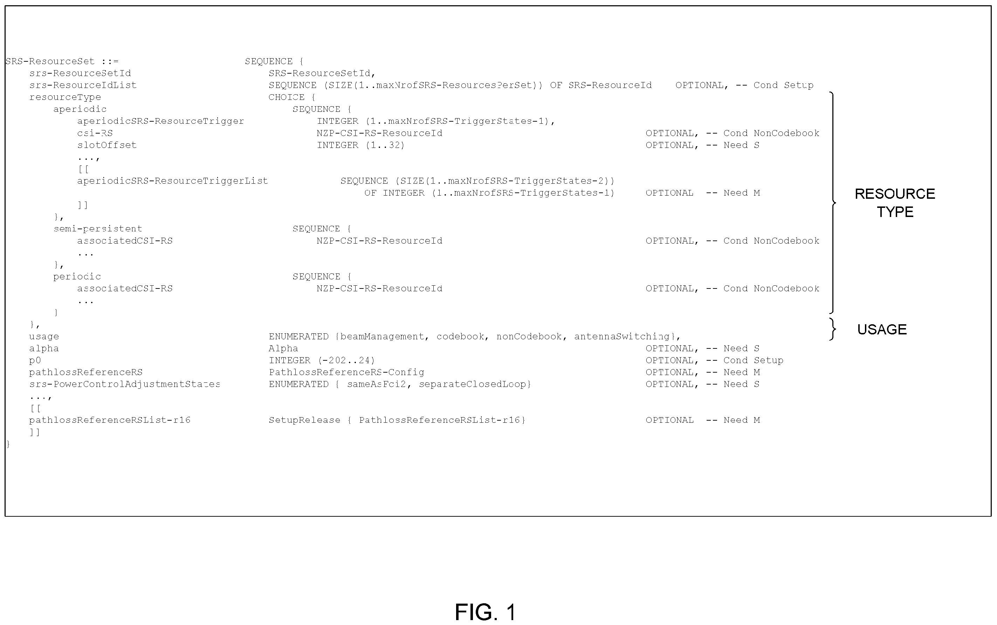

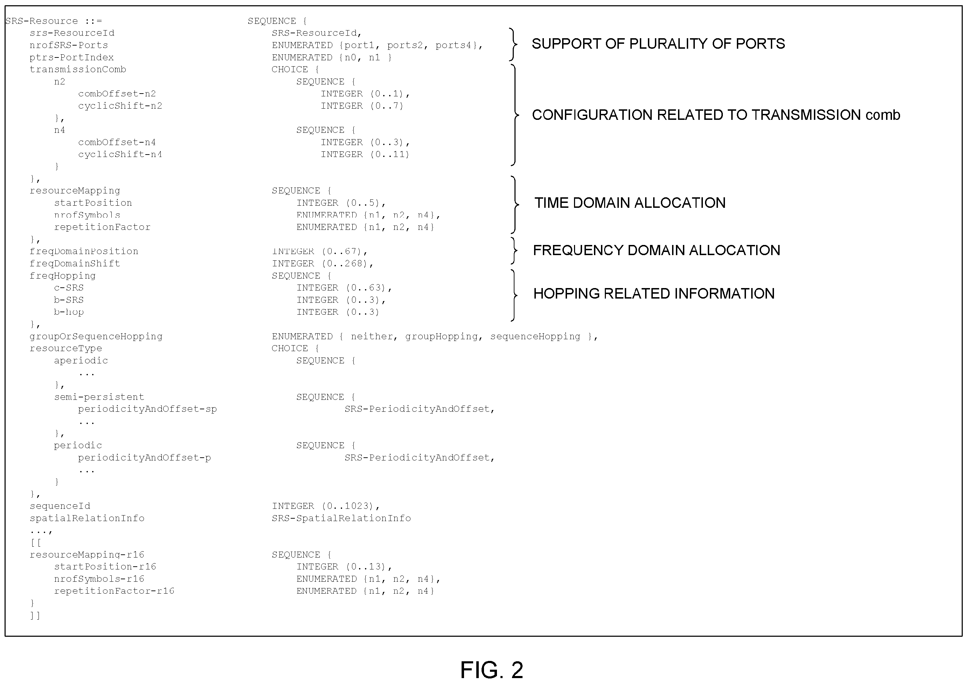

An SRS configuration information element (for example, an RRC information element "SRS-Config") may include an SRS resource set configuration information element (FIG. 1), an SRS resource configuration information element (FIG. 2), and the like.

The SRS resource set configuration information element (for example, an RRC parameter "SRS-ResourceSet") may include pieces of information of an SRS resource set ID (Identifier) (SRS-ResourceSetId), a list of SRS resource IDs (SRS-ResourceId) used in the resource set, an SRS resource type (resourceType), and a usage of the SRS.

Here, the SRS resource type may indicate a time domain behavior (same time domain behavior) of an SRS resource configuration, or may indicate any one of a periodic SRS (P-SRS), a semi-persistent SRS (SP-SRS), and an aperiodic SRS (A-SRS). Note that the UE may transmit the P-SRS and the SP-SRS periodically (or periodically after activation). The UE may transmit the A-SRS, based on an SRS request on DCI.

The usage of the SRS (an RRC parameter "usage," an L1 (Layer-1) parameter "SRS-SetUse") may be, for example, beam management (beamManagement), a codebook (CB), a non-codebook (NCB), antenna switching (antennaSwitcing), or the like. For example, the SRS with the usage of the codebook or the non-codebook may be used for determination of a precoder for codebook based or non-codebook based uplink shared channel (Physical Uplink Shared Channel (PUSCH)) transmission based on the SRI.

For the SRS with the usage of beam management, it may be assumed that only one SRS resource in each SRS resource set can be transmitted in a certain time instant (given time instant). Note that, in the same Bandwidth Part (BWP), when the plurality of SRS resources corresponding to the same time domain behavior respectively belong to different SRS resource sets, these SRS resources may be simultaneously transmitted.

The SRS resource configuration information element (for example, an RRC parameter "SRS-Resource") may include an SRS resource ID (SRS-ResourceId), the number of SRS ports, an SRS port number, a number of transmission comb, SRS resource mapping (for example, a time and/or frequency resource position, a resource offset, periodicity of the resources, the number of repetitions, the number of SRS symbols, an SRS bandwidth, or the like), hopping related information, an SRS resource type, a sequence ID, spatial relation information, and the like.

A value of the number of transmission comb (transmissionComb) is $\{2, 4\}$. A value of the number of SRS ports (nrofSRS-Ports) $N_{ap}^{SRS}$ is $\{1, 2, 4\}$. A value of an antenna port number $p_i$ is $\{1000, 1001, ...\}$. A value of the number of SRS consecutive OFDM symbols (nrofSymbols) $N_{symb}^{SRS}$ is $\{1, 2, 4\}$. For a start position (startPosition) in the time domain, an offset $l_{offset}$ of the symbols that can be counted backwards in a time domain direction from the end of a slot is $\{0, 1, ..., 5\}$, and the start position is given by $l_0 = N_{symb}^{slot} - 1 - l_{offset}$.

A configuration of the number of transmission comb may include a comb offset and a cyclic shift (a cyclic shift (CS) index, a CS number).

The SRS from the UE in which at least one of the comb offset (subcarrier offset) $= \{0, 1, ..., K_{TC} - 1\}$ and the CS is different may be multiplexed using the same number of transmission comb, the same RB, and the same symbol.

The UE may switch Bandwidth Parts (BWPs) for transmitting the SRS for each slot, or may switch antennas. The UE may apply at least one of intra-slot hopping and inter-slot hopping to SRS transmission.

In an existing SRS, a frequency domain start position $k_0^{p\_i}$ for $p_i$ (p_i) is given by the following calculation expression.

$$k_0^{p\_i} = \bar{k}_0^{p\_i} + \sum_{b=0}^{B_{SRS}} K_{TC} M_{SC,b}^{SRS} n_b$$

Here, $\bar{k}$ indicates a variable with an overline placed over k, and may also be referred to as k-bar. $\bar{k}_0^{p\_i}$ may be based on a comb offset. $K_{TC}$ is a number of transmission comb. $M_{SC,b}^{SRS}$ is the number of subcarriers used for SRS transmission out of an SRS bandwidth $m_{SRS,b}$ [RB]. $n_b$ is a constant.

(SRS Antenna Switching)

In Rel-15 NR, as described above, antenna switching (which may be referred to as antenna port switching) can be configured as a usage of the SRS. SRS antenna switching may be used to perform downlink CSI acquisition in a time division duplex (TDD) band, using an uplink SRS, for example.

For example, for the UE having a capability that the number of antenna ports available for transmission is less than the number of antenna ports available for reception, UL SRS measurement may be used in order to determine a DL precoder.

Note that the UE may report, to a network, UE capability information (for example, an RRC parameter "supportedSRS-TxPortSwitch") indicating a transmission port switching pattern of the supported SRS. This pattern may be expressed in a format of "txry," such as "t1r2" and "t2r4," for example, and this may mean that SRS transmission can be performed using x antenna ports out of a total of y antennas (which may be expressed as xTyR). Here, y may correspond to all of or a subset of receive antennas of the UE.

For example, for DL CSI acquisition, the UE of 2T4R (2 transmission ports, 4 reception ports) may include two SRS resources each including two ports, and may be configured with the SRS resource set having the usage of antenna switching.

Note that, when x and y in "txty" have the same value, it may be expressed as xT = xR (for example, 4T = 4R).

(SRS Bandwidth Configuration)

In Rel-16 specifications, the SRS bandwidth is defined. $C_{SRS} \in \{0, ..., 63\}$ (configuration index, row index) and $B_{SRS} \in \{0, 1, 2, 3\}$ (number of boundaries of band division) are configured by higher layer signaling, and the SRS bandwidth is determined using the table (association/mapping of parameters related to the SRS) of FIG. 1.

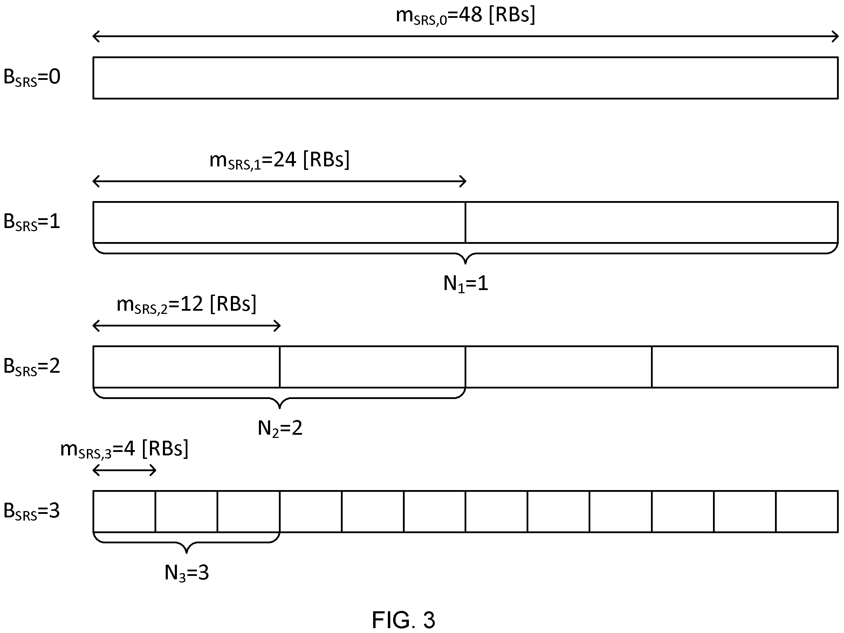

As in the example of FIG. 3, an available bandwidth is divided into some parts, using $B_{SRS}$. A plurality of parts are used for SRS hopping. $C_{SRS}$ configures a set of SRS bands. With $B_{SRS}$, one bandwidth in the configured set is selected. The present example shows a case in which $C_{SRS} = 13$. All of candidate values of the SRS bandwidth $m_{SRS,b}$ (number of RBs) are a multiple of 4. $B_{SRS}$ is used to divide an available bandwidth into a plurality of parts. As $B_{SRS}$ is larger, the number of frequency sections is larger (the size of each frequency section is smaller).

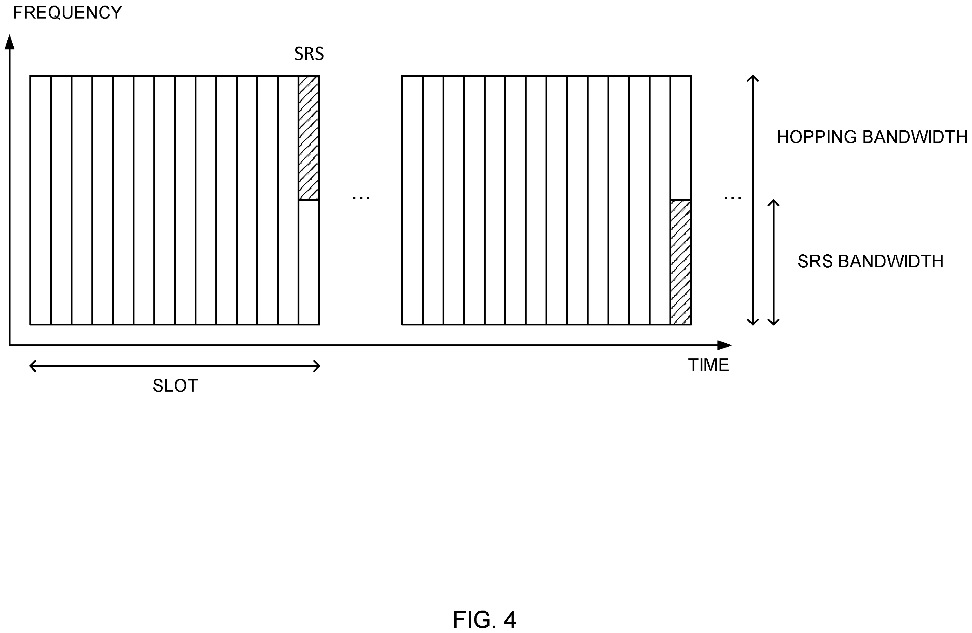

For SRS frequency hopping, a parameter $b_{hop} \in \{0, 1, 2, 3\}$ is configured. When $b_{hop} < B_{SRS}$, SRS frequency hopping is enabled. As shown in the example of FIG. 4, the SRS is transmitted using an SRS band out of bands (hopping bands) given for SRS frequency hopping.

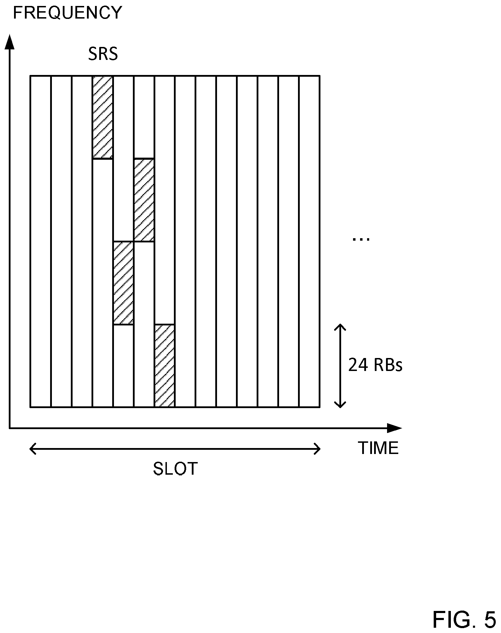

FIG. 5 shows an example of SRS frequency hopping when $C_{SRS} = 24$, $b_{hop} = 0$, $B_{SRS} = 2$, and $N_{symb}^{SRS} = 4$. Among bands (hopping bands) given for SRS frequency hopping, the SRS having an SRS band $m_{SRS,b}$ (in the present example, 24 RBs) is transmitted.

(Partial Frequency Sounding)

RB-level partial frequency sounding (resource block (RB)-level partial frequency sounding (RPFS), partial RB-level frequency sounding, partial frequency sounding) using the SRS has been under study.

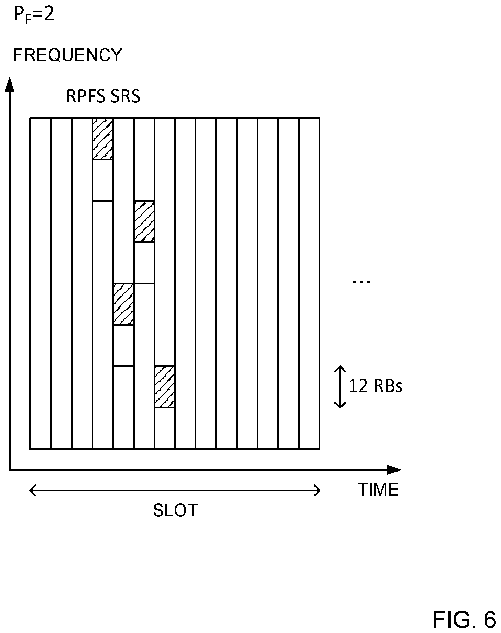

FIG. 6 shows an example of RPFS SRS frequency hopping when the number of parts (partial frequency sounding factor) $P_F = 2$, in addition to the configuration of FIG. 5. In each hop, SRS transmission may be performed over a bandwidth (in the present example, 12 RBs) of $1/P_F$ of an available bandwidth.

A start RB index of $1/P_F * m_{SRS,BSRS}$ RBs of $m_{SRS,BSRS}$ RBs may be given by the following expression.

$$N_{offset} = k_F/P_F * m_{SRS,BSRS} \quad \text{(Expression 0)}$$

Here, $k_F = \{0, ..., P_F - 1\}$ may hold.

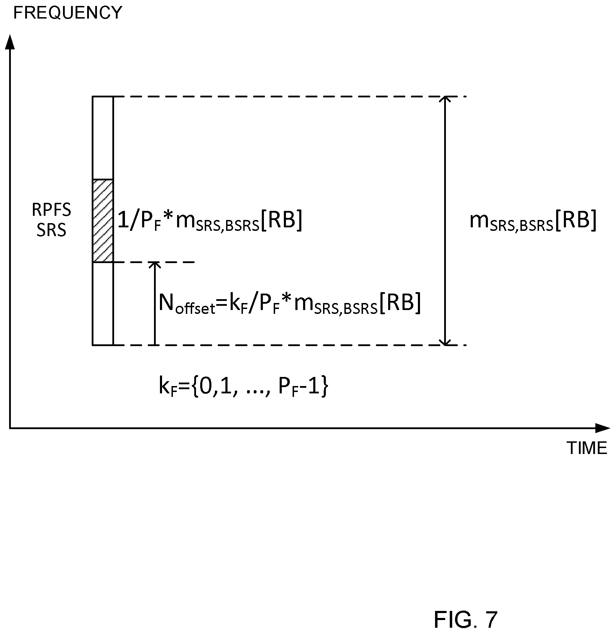

In the example of FIG. 7, an existing SRS entire band $m_{SRS,BSRS}$ is divided into $P_F$ partial bands (bandwidth $1/P_F * m_{SRS,BSRS}$). The start RB index (partial band offset) of one partial band is $N_{offset}$. $N_{offset}$ may be constant throughout a plurality of hops, or may be configured/determined for each hop. Whether or not $N_{offset}$ for each hop is used may be configured by higher layer signaling.

According to the RPFS SRS, in comparison to the entire band sounding, the partial band sounding assigns available transmission power to a smaller bandwidth section, and thus provides a method of increasing power per subcarrier. In addition, by providing a network with an opportunity to multiplex more UE ports in the rest of frequency resources, SRS capacity can be enhanced. In comparison to a case in which a narrow band is assigned by existing (Rel. 16) SRS transmission, a wide band can be sounded using a smaller number of times.

RPFS may support $P_F = \{2, 4\}$.

For bandwidth $1/P_F * m_{SRS,BSRS}$ [RB] of RPFS, at least one of the following bandwidths 1 to 4 may be supported.

[Bandwidth 1] $1/P_F * m_{SRS,BSRS}$ is an integer value.
[Bandwidth 2] $1/P_F * m_{SRS,BSRS}$ is an integer value with a minimum value being 4.
[Bandwidth 3] $1/P_F * m_{SRS,BSRS}$ is a multiple of 4.
[Bandwidth 4] In alternative 1 or alternative 2, $1/P_F * m_{SRS,BSRS}$ is rounded to a multiple of 4 (round function, rounding off).

It has been under study that, for the RPFS SRS, a sequence having a sequence length other than a sequence length supported in existing specifications is not to be introduced.

It has been under study that, for the RPFS SRS, the UE generates a Zadoff-Chu (ZC) sequence of length $12/P_F *$

$m_{SRS,BSRS}$/Comb.

For the RPFS SRS, an existing low peak-to-average power ratio (PAPR) sequence may be used. As a low PAPR sequence having a sequence length of 36 or more, a ZC sequence having any sequence length is defined in a specification. As a low PAPR sequence having a sequence length of less than 36, computer-generated (CG) is defined in a specification for sequence lengths of 6, 12, 18, 24, and 30.

On the other hand, depending on values such as $P_F$ and $K_{TC}$, the sequence length (number of subcarriers) is less than 36, and a sequence of other than 6, 12, 18, 24, and 30 is used.

(Multi-Port SRS Transmission)

Multi-port SRS transmission will be described. When multi-port SRS transmission is performed, the UE performs multiplexing using a cyclic shift. Expression (1) shows a cyclic shift $\alpha_i$ in an antenna port $P_i$. It has been under study that Expression (1) is used in Rel. 17. In Expression (1), a case in which the number of ports $N_{ap}^{SRS} = 4$ and a maximum number of cyclic shifts $n_{SRS}^{CS,max} = 6$ is defined as case 1, and a case other than that (otherwise) is defined as case 2. In case 1, the number of transmission comb $K_{TC}$ is 8.

[Math. 1]

Equation (1)

$$\alpha_i = 2\pi \frac{n_{SRS}^{CS,i}}{n_{SRS}^{CS,max}}, \text{ where:}$$

$$n_{SRS}^{CS,i} = \begin{cases} \left( n_{SRS}^{CS} + \frac{n_{SRS}^{CS,max} \lfloor (p_i - 1000)/2 \rfloor}{N_{ap}^{SRS}/2} \right) \bmod n_{SRS}^{CS,max} & \text{if } N_{ap}^{SRS} = 4 \text{ and } n_{SRS}^{CS,max} = 6 \\ \left( n_{SRS}^{CS} + \frac{n_{SRS}^{CS,max}(p_i - 1000)}{N_{ap}^{SRS}} \right) \bmod n_{SRS}^{CS,max} & \text{otherwise} \end{cases}$$

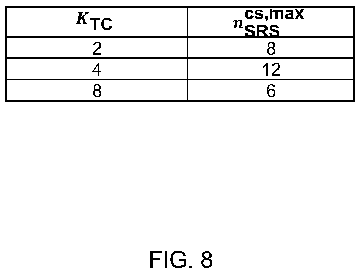

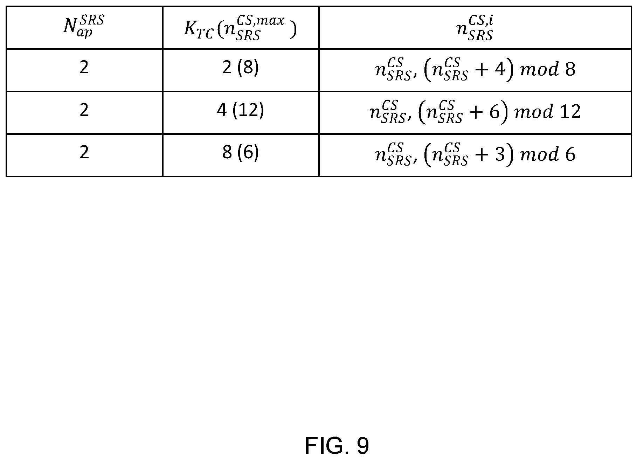

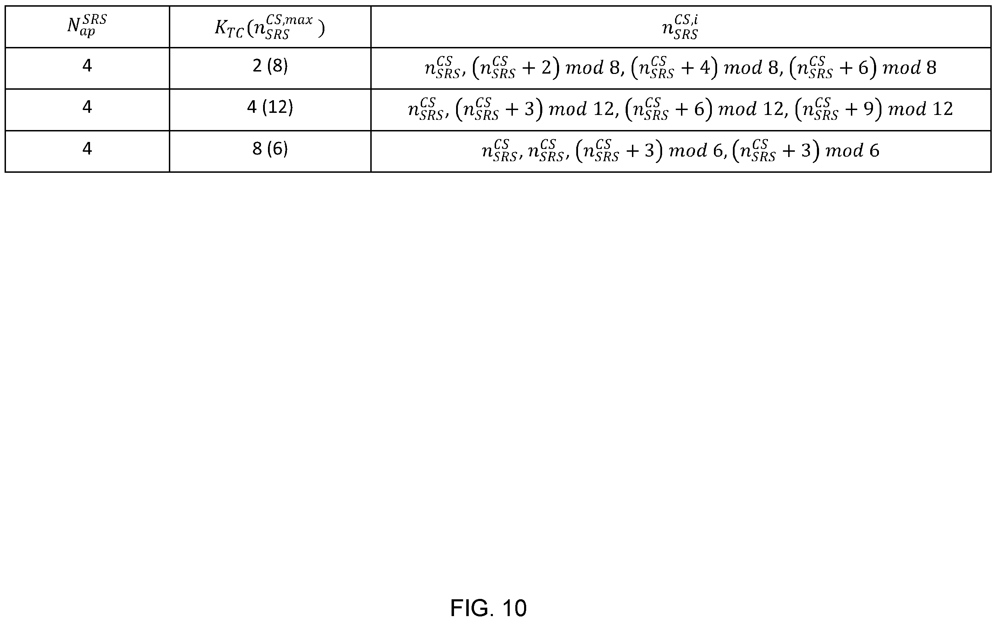

FIG. 8 is a table to show a relationship between the number of transmission comb $K_{TC}$ and the maximum number of cyclic shifts of the SRS $n_{SRS}^{CS,max}$ in Rel. 16. Note that $n_{SRS}^{CS,max} \in \{0, 1, ..., n_{SRS}^{CS,max}\}$ and $N_{ap}^{SRS} \in \{1, 2, 4\}$. FIG. 9 is a table to show the number of transmission comb $K_{TC}$ and a cyclic shift value of the SRS $n_{SRS}^{CS,i}$ when the number of SRS ports $N_{ap}^{SRS}$ is 2. FIG. 10 is a table to show the number of transmission comb $K_{TC}$ and the cyclic shift value of the SRS $n_{SRS}^{CS,i}$ when the number of SRS ports $N_{ap}^{SRS}$ is 4.

Expression (2) shows the resource start position $k_0^{p\_i}$ in the frequency direction. It has been under study that Expression (2) is used in Rel. 17. Note that, regarding three cases of $k_{TC}^{p\_i}$, a first case (A) corresponds to odd-numbered ports {1001, 1003} when the number of transmission comb is 8. A second case (case B) corresponds to odd-numbered ports {1001, 1003} having average or more cyclic shift values ($n_{ap}^{CS} = \in \{n_{SRS}^{CS,max}/2, ..., n_{SRS}^{CS,max}\}$) when the number of transmission comb is 2 or 4. A third case (case C) is a case other than the above.

Regarding nshift, a parameter freqDomainShift of the SRS resource configuration information element (FIG. 2) is used. Regarding $k_{TC}$, combOffset of the SRS resource configuration information element is used. Regarding $K_{TC}$, transmissionComb of the SRS resource configuration information element is used. In other words, in case C, values of RRC parameters are directly applied.

[Math. 2]

Equation (2)

$$k_0^{p_i} = \bar{k}_0^{p_i} + n_{offset}^{FH} + n_{offset}^{RPFS}$$ , where:

$$\bar{k}_0^{p_i} = n_{shift} N_{SC}^{RB} + \left( k_{TC}^{p_i} + k_{offset}^{l'} \right) mod\, K_{TC}$$

$$k_{TC}^{p_i}$$
$$= \begin{cases} (\bar{k}_{TC} + K_{TC}/2)\, mod\, K_{TC} & if\, N_{ap}^{SRS} = 4,\, p_i \in \{1001,\, 1003\}\, and\, n_{SRS}^{CS,max} = 6 \\ (\bar{k}_{TC} + K_{TC}/2)\, mod\, K_{TC} & if\, N_{ap}^{SRS} = 4,\, p_i \in \{1001,\, 1003\}\, and\, n_{SRS}^{CS} = \in \{n_{SRS}^{CS,max}/2,\, ...,\, n_{SRS}^{CS,max} - 1\} \\ \bar{k}_{TC} & otherwise \end{cases}$$

$$k_{offset}^{l'}$$ : Positioning specific offset

$$n_{offset}^{FH} = \sum_{b=0}^{B_{SRS}} m_{SRS,b} N_{SC}^{RB} n_b$$

$$n_{offset}^{RPFS} = N_{SC}^{RB} m_{SRS,B_{SRS}} ((k_F + k_{hop})\, mod\, P_F)/P_F$$

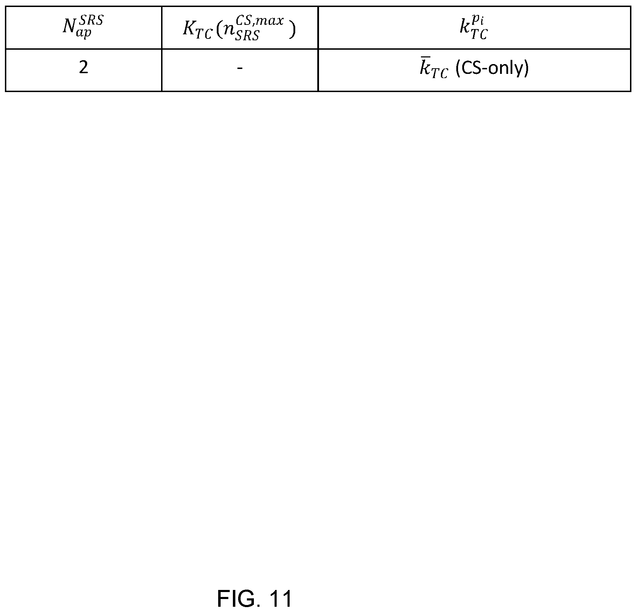

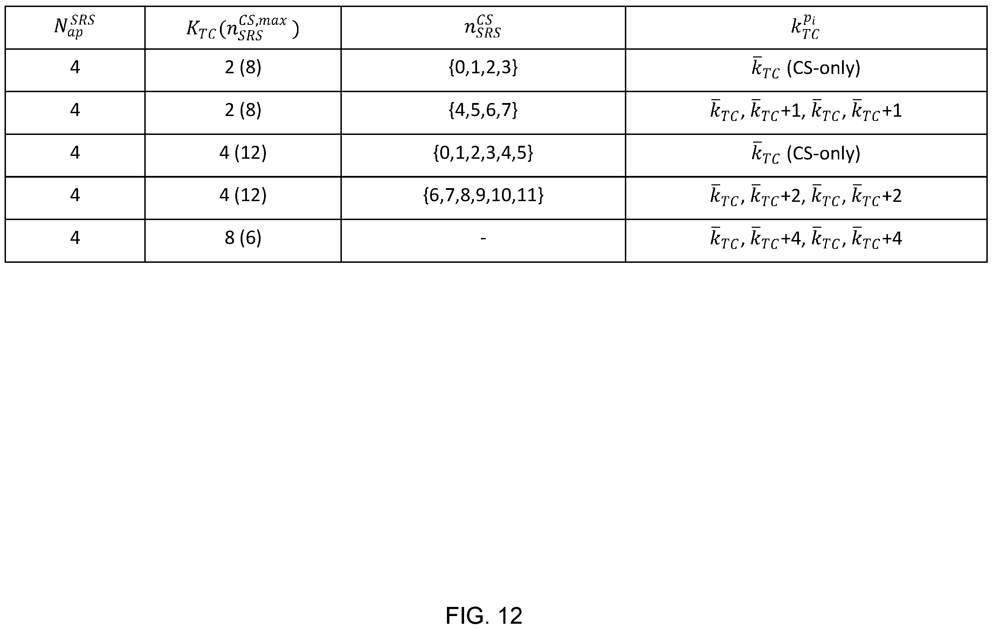

FIG. 11 is a diagram to show the resource start position $k_{TC}^{p\_i}$ in the frequency direction when the number of SRS ports $N_{ap}^{SRS}$ is 2. In FIG. 11, case C of Expression (2) is used. FIG. 12 is a diagram to show the resource start position $k_0^{p\_i}$ in the frequency direction when the number of SRS ports $N_{ap}^{SRS}$ is 4. In FIG. 12, in a first or third row (a case of $(n_{SRS}^{CS})$ = {0, 1, 2, 3} or {0, 1, 2, 3, 4, 5}), case C of Expression (2) is applied, in a second or fourth row (a case of $(n_{SRS}^{CS})$ = {4, 5, 6, 7} or {6, 7, 8, 9, 10, 11}), case B of Expression (2) is applied, and in a fifth row (a case of $K_{TC}$ ($n_{SRS}^{CS,max}$) = 8 (6)), case A is applied.

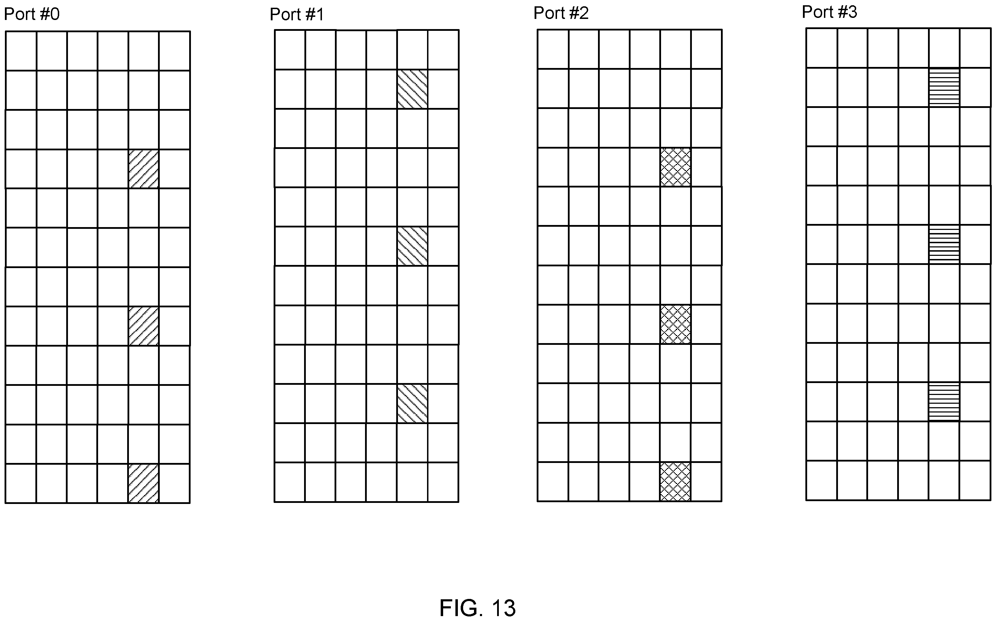

FIG. 13 is a diagram to show SRS allocation in each port when the number of transmission comb is 4. In ports #0 and 2 of FIG. 13, case C of Expression (2) is used, and in ports #1 and 3, case B is used. In each port, different cyclic shifts are used. Note that, in FIG. 13, the horizontal axis represents time and the vertical axis represents frequency. This similarly applies to other figures showing SRS allocation.

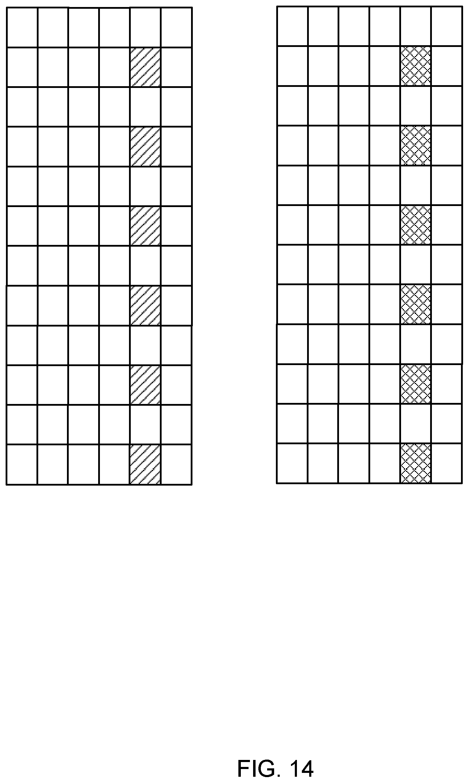

FIG. 14 is a diagram to show SRS allocation in each port when the number of transmission comb is 2. In ports #0 and 1 of FIG. 14, case C of Expression (2) is used. In each port, different cyclic shifts are used.

(Analysis)

In Rel. 15/16, a maximum number of UL layers is 4, and a maximum number of SRS ports is also 4. Thus, codebook-based UL transmission is implemented using simple relationships of ports of a UL channel/signal (PUSCH/SRS). However, in Rel. 18, it has been under study that more than four layers are supported in UL transmission. However, whether to support SRS ports having more than four ports, various configurations in a case of support thereof, and the like have not been made clear.

In view of this, the inventors of the present invention came up with the idea of a method for appropriately performing transmission of an SRS using more than four SRS ports.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, description of "Rel. XX" indicates a release of 3GPP. Note that a release number "XX" is an example, and may be replaced with another number.

In the present disclosure, a CS index, a CS number, a CS value (cyclic shift value), $n_{SRS}^{cs}$, and $n_{SRS}^{cs,i}$ may be interchangeably interpreted.

In the present disclosure, an SRS sequence may be a low peak-to-average power ratio (PAPR) sequence defined by the cyclic shift (CS) $\alpha_i$ of a base sequence. $\alpha_i$ may be given by $2\pi * n_{SRS}^{cs,i}/n_{SRS}^{cs,max}$, using the CS index $n_{SRS}^{cs,i}$ and the CS maximum number $n_{SRS}^{cs,max}$. $n_{SRS}^{cs,i}$ may be $\{0, 1, ..., n_{SRS}^{cs,max} - 1\}$, based on the CS index $n_{SRS}^{cs}$, $n_{SRS}^{cs,max}$, the antenna port number $p_i$, and the number of ports $N_{ap}^{SRS}$. The CS index $n_{SRS}^{cs}$ or $n_{SRS}^{cs,i}$ may be configured by higher layer signaling, or may be included in a transmission comb configuration (higher layer parameter transmissionComb).

In the present disclosure, a transmission comb configuration, transmissionComb, and a number of transmission comb may be interchangeably interpreted. In the present disclosure, a transmission comb configuration may include at least one of the number of transmission comb ($K_{TC}$), the comb offset (start subcarrier offset), and the CS index.

As the SRS in the present disclosure, at least one of the P-SRS, the SP-SRS, and the AP-SRS may be used. In the present disclosure, a P SRS and a P-SRS may be interchangeably interpreted. In the present disclosure, an SP SRS and an SP-SRS may be interchangeably interpreted. In the present disclosure, an AP SRS and an AP-SRS may be interchangeably interpreted. A resource set group and an SRS resource set group may be interchangeably interpreted.

In the present disclosure, application of xTyR, transmission (reporting) of "txry" in UE capability information (for example, supportedSRS-TxPortSwitch), and configuration of xTyR in higher layer signaling/physical layer signaling may be interchangeably interpreted. In the present disclosure, UL transmission with the number of layers greater than 4 may be applied. Processing of the present disclosure may be applied to the UE for which the number of layers greater than 4 is supported.

In the present disclosure, an SRS port, a transmission port, and an SRS transmission port may be interchangeably interpreted. In the present disclosure, a reception port, an antenna port, and a UE antenna port may be interchangeably interpreted.

In the present disclosure, a port and an antenna port may be interchangeably interpreted. "X ports" in the present disclosure may mean X antenna ports (SRS antenna ports).

In the present disclosure, multiplexing using different comb indexes, frequency division multiplexing (FDM), and multiplexing using the same time resources and different frequency resources may be interchangeably interpreted. In the present disclosure, multiplexing using different cyclic shift indexes, Code Division Multiplexing (CDM), and multiplexing using different cyclic shift indexes and the same time resources and the same frequency resources may be interchangeably interpreted.

In the present disclosure, ports #0 to #7 may be interpreted as ports #1000 to #1007. In other words, 1000 may be added to the port numbers of ports #0 to #7.

(Radio Communication Method)

<Zeroth Embodiment>

When a corresponding higher layer parameter (for example, XXX_r18) is configured for the UE, the UE may apply at least one example in the present disclosure. When the higher layer parameter is not configured, the UE may reuse specifications corresponding to Rel. 15 to Rel. 17.

The UE may apply at least one example in the present disclosure only when the UE reports a corresponding UE capability. The UE may receive an indication/configuration (for example, an indication/configuration regarding enabling/-disabling) related to at least one of the examples in the present disclosure by higher layer signaling/physical layer signaling. The indication/configuration may correspond to the UE capability information that has been transmitted by the UE. At least one of the examples in the present disclosure may be applied only to the UE that has received the indication/configuration, the UE that has transmitted corresponding UE capability information, or the UE that supports a corresponding UE capability. The UE capability may be at least one of the following.

(1) Whether to support extension of the cyclic shift of the SRS.
(2) Whether to support use of more number of transmission combs for the SRS.
(3) Whether to support a TD-OCC of the SRS.
(4) Whether to support more than four SRS ports (for example, six or eight).
(5) Whether to support ports of a CB/NCB-based PUSCH being greater than 4 (for example, 6 or 8).

[Variations]

At least one of the examples of the present disclosure may be applicable only to a specific usage of the SRS (for example, any one of CB only, antenna switching only, CB or antenna switching, or the like). When the usage is antenna switching, the transmission port switching pattern of the SRS may be one of 6T6R, 6T8R, and 8T8R. This is because an SRS with more than four ports and the usage of the CB may be required to support a CB-based PUSCH with four or more layers.

At least one of the examples of the present disclosure may be applicable to only one (for example, A-SRS only) of the time domain behaviors of the SRS. With this, complexity of UE operation can be avoided.

<First Embodiment>

The UE may receive a configuration indicating more than four SRS ports, and control (transmit) transmission of the SRS, using the more than four SRS ports. The configuration may be indicated by an RRC parameter nrofSRS-Ports.

{Aspect 1-1}

The present aspect will describe cyclic shift extension for reducing larger capacity. The UE may apply a cyclic shift having finer granularity than an existing cyclic shift. For example, the UE may multiplex the SRS, using the same number of cyclic shifts as the number of SRS ports.

<<Number of SRS Ports = 6>>

An example in which the number of SRS ports is 6 will be described.

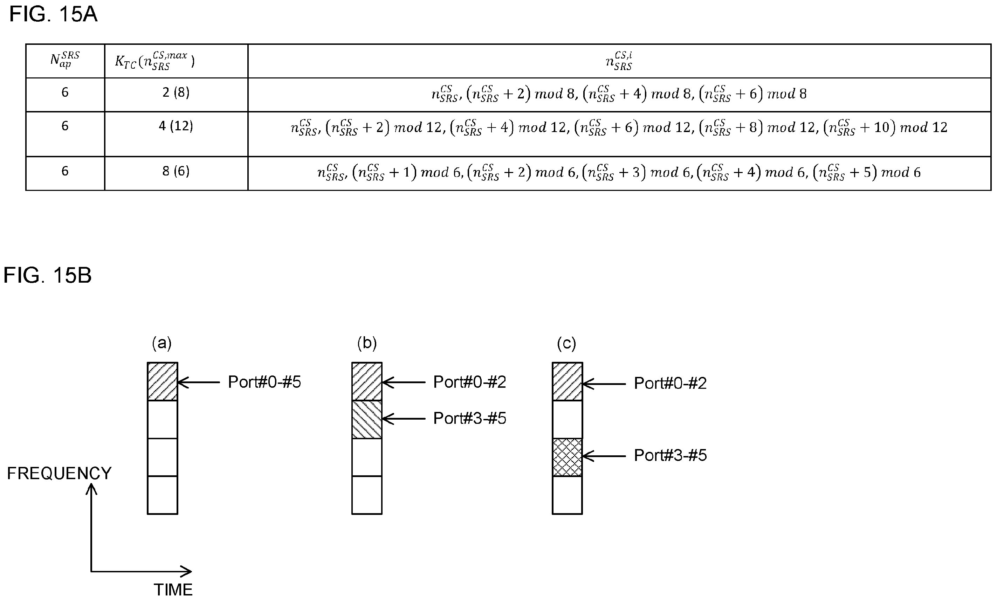

FIG. 15A is a table to show the number of transmission comb $K_{TC}$ and the cyclic shift value of the SRS $n_{SRS}^{CS,i}$ when the number of SRS ports $N_{ap}^{SRS}$ is 6. FIG. 15A shows that six cyclic shifts (six cyclic shift values) are applied to SRS transmission with six ports. Note that only the cases of number of transmission comb $K_{TC}$ = 4, 8 of FIG. 15A may be used, and the case of number of transmission comb $K_{TC}$ = 2 may be unused. This is because, while the maximum number of cyclic shifts $n_{SRS}^{CS,max}$ is 12 in the case of number of transmission comb $K_{TC}$ = 2, it is preferable that the maximum number of cyclic shifts be a multiple of the number of ports.

One cyclic shift value may be applied to a plurality of ports. For example, one cyclic shift value may be applied to another comb in a plurality of combs.

FIG. 15B is a diagram to show an example of SRS resource allocation, which corresponds to FIG. 15A. In (a), six ports are allocated to the same resource (one comb), and are multiplexed using only the cyclic shifts. In (b) and (c), six ports are allocated to two resources (two combs), and are multiplexed by the cyclic shifts and the frequency resources. The cyclic shift values used in each resource (each comb) of (b) and (c) may be the same or may be different.

With this, even when the number of SRS ports is 6, all of the ports can be multiplexed using the cyclic shifts, and thus the resources of the SRS can be reduced.

Note that, when the present aspect is applied, an SRS sequence length of less than 6 need not be taken into consideration. For example, when $K_{TC}$ = 4 and $P_F$ = 4, the minimum SRS sequence length is 48/(4 * 4) = 3. Thus, when the number of ports is 6, the UE need not assume (apply) the configuration of $K_{TC}$ = 4 and $P_F$ = 4. Alternatively, when the number of ports is 6, the UE need not assume (apply) the configuration of $P_F$ = 4.

For example, when $K_{TC}$ = 8 and $P_F$ = 2 or 4, the minimum SRS sequence length is 48/(8 * 2) = 3. Thus, when the number of ports is 6, the UE need not assume (apply) the configuration of $K_{TC}$ = 8 and $P_F$ = 2 or 4. When the number of ports is 6, the UE need not assume (apply) the configuration of $P_F = 2$ or 4.

<<Number of SRS Ports = 8>>

An example in which the number of SRS ports is 8 will be described.

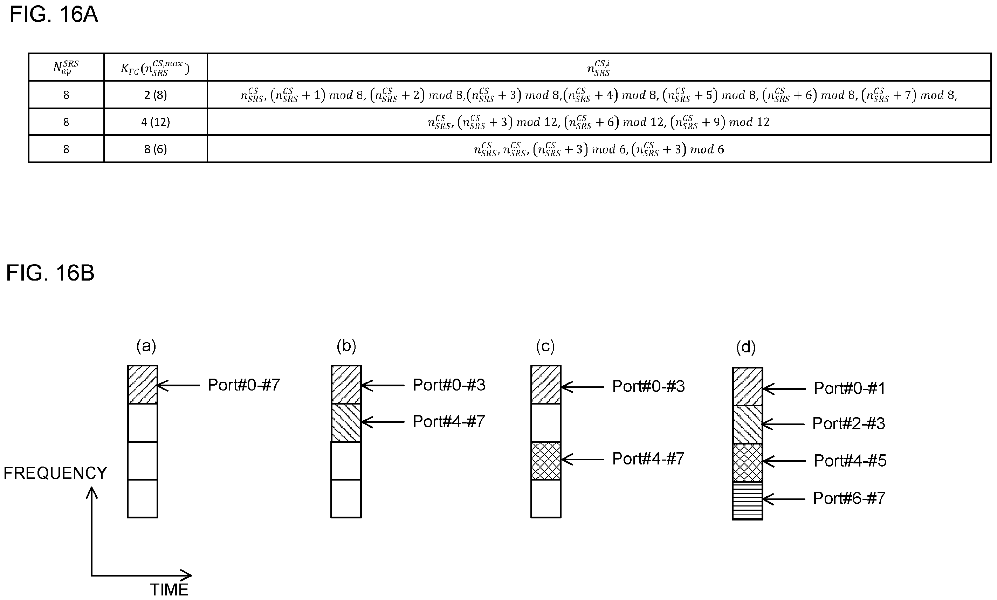

FIG. 16A is a table to show the number of transmission comb $K_{TC}$ and the cyclic shift value of the SRS $n_{SRS}^{CS,i}$ when the number of SRS ports $N_{ap}^{SRS}$ is 8. FIG. 16A shows that eight cyclic shifts (eight cyclic shift values) are applied to SRS transmission with eight ports. Note that only the case of number of transmission comb $K_{TC} = 2$ of FIG. 16A may be used, and the cases of number of transmission comb $K_{TC} = 4, 8$ may be unused. This is because, while the maximum number of cyclic shifts $n_{SRS}^{CS,max}$ is 12, 6 in the cases of number of transmission comb $K_{TC} = 4, 8$, respectively, it is preferable that the maximum number of cyclic shifts be a multiple of the number of ports.

One cyclic shift value may be applied to a plurality of ports. For example, one cyclic shift value may be applied to another comb in a plurality of combs.

FIG. 16B is a diagram to show an example of SRS resource allocation, which corresponds to FIG. 16A. In (a), eight ports are allocated to the same resource (one comb), and are multiplexed using only the cyclic shifts. In (b) and (c), eight ports are allocated to two resources (combs), and are multiplexed by the cyclic shifts and the frequency resources. In (d), eight ports are allocated to four resources (four combs), and are multiplexed using the cyclic shifts and the frequency resources. The cyclic shift values used in each resource (each comb) of (b) to (d) may be the same or may be different.

Note that, when the present aspect is applied, an SRS sequence length of less than 8 need not be taken into consideration. For example, when $K_{TC} = 2$ and $P_F = 4$, the minimum SRS sequence length is $48/(2 * 4) = 6$. Thus, when the number of ports is 8, the UE need not assume (apply) the configuration of $K_{TC} = 4$ and $P_F = 4$. Alternatively, when the number of ports is 8, the UE need not assume (apply) the configuration of $P_F = 4$.

<<Extension of Maximum Number of Cyclic Shifts>>

As described above, it is preferable that the maximum number of cyclic shifts be a multiple of the number of ports. Thus, when the number of ports (for example, 6 or 8) that is larger than an existing number of ports is applied, the UE may apply the maximum number of cyclic shifts, which is a multiple of the number of ports and is different from an existing maximum number of cyclic shifts shown in FIG. 8. In this case, a new maximum number of cyclic shifts $n_{SRS}^{CS,max}$ is also applied to an expression for calculating the cyclic shift $\alpha_i$ shown in Expression (1).

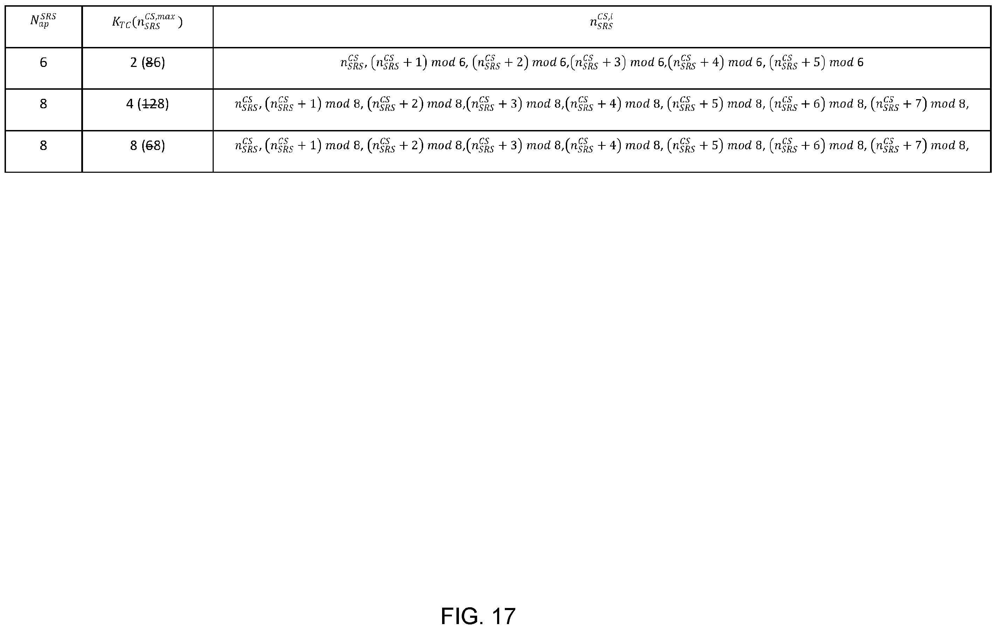

FIG. 17 is a table to show the number of transmission comb $K_{TC}$ and the cyclic shift value of the SRS $n_{SRS}^{CS,i}$ when the number of SRS ports $N_{ap}^{SRS}$ is 6 or 8. In FIG. 17, values different from the existing maximum number of cyclic shifts $n_{SRS}^{CS,max}$ shown in FIG. 8 are used. As shown in FIG. 17, when the number of ports is 6, 6 is applied as the maximum number of cyclic shifts, and when the number of ports is 8, 8 is applied as the maximum number of cyclic shifts.

One cyclic shift value may be applied to a plurality of ports. For example, one cyclic shift value may be applied to another comb in a plurality of combs.

Note that, similarly to other examples, the SRS sequence length of less than the number of ports need not be taken into consideration. For example, when $K_{TC} = 4$ and $P_F = 2$ or 4, the minimum SRS sequence length is $48/(4 * 2) = 6$. Thus, when the number of ports is 8, the UE need not assume (apply) the configuration of $K_{TC} = 4$ and $P_F = 2$ or 4. Alternatively, when the number of ports is 8, the UE need not assume (apply) the configuration of $P_F = 2$ or 4.

For example, when $K_{TC} = 8$ and RPFS are not applied, the minimum SRS sequence length is $48/(8 * 1) = 6$. Thus, when the number of ports is 8, the UE need not assume (apply) the configuration of $K_{TC} = 8$ (that is, $m_{SRS} = 4$).

According to the present aspect, even when the number of SRS ports is more than 4 (for example, 6 or 8), all of the ports can be multiplexed using the cyclic shifts, and thus the resources of the SRS can be reduced. By extending the maximum number of cyclic shift cyclic shifts, various numbers of combs can be applied.

{Aspect 1-2}

The present aspect will describe order of the SRS ports (cyclic shift calculation). To calculate the cyclic shift value $n_{SRS}^{CS,i}$, the UE may use the existing expression for all of the ports (option 1). The UE may calculate the cyclic shift value, using different methods (expressions) for some SRS ports (first to fourth SRS ports) and other SRS ports (fifth and subsequent SRS ports) out of more than four (for example, six or eight) SRS ports (options 2-1 and 2-2).

<<Option 1>>

To calculate the cyclic shift value $n_{SRS}^{CS,i}$, the existing expression (for example, of Rel. 16) may be reused for all of the ports (including ports {1000, 1001, 1002, 1003})). Expression (3) shows a cyclic value in Rel. 16. By reusing the existing expression, specifications can be less affected.

[Math. 3]

$$\text{Equation (3)}$$

$$n_{SRS}^{CS,i} = \left( n_{SRS}^{CS} + \frac{n_{SRS}^{CS,max}(p_i - 1000)}{N_{ap}^{SRS}} \right) \bmod n_{SRS}^{CS,max}$$

<<Option 2-1>>

As shown in Equations (4), to calculate the cyclic shift value $n_{SRS}^{CS,i}$, the UE may use different methods (expressions) for some SRS ports (ports {1000, 1001, 1002, 1003}) and other SRS ports (ports {1004, 1005, 1006, 1007}). The expression is not changed for existing ports, and thus implementation of the UE can be less affected. The present option may be applied only when the number of transmission comb is 2 and eight ports are used.

[Math. 4]

$$\text{Equations (4)}$$

$$n_{SRS}^{CS,i} = \left( n_{SRS}^{CS} + \frac{n_{SRS}^{CS,max}(p_i - 1000)}{N_{ap}^{SRS}/2} \right) \bmod n_{SRS}^{CS,max} \text{ for ports } \{1000, 1001, 1002, 1003\},$$

$$n_{SRS}^{CS,i} = \left( n_{SRS}^{CS} + \frac{n_{SRS}^{CS,max}(p_i - 1003)}{N_{ap}^{SRS}/2} + 1 \right) \bmod n_{SRS}^{CS,max} \text{ for ports } \{1004, 1005, 1006, 1007\}$$

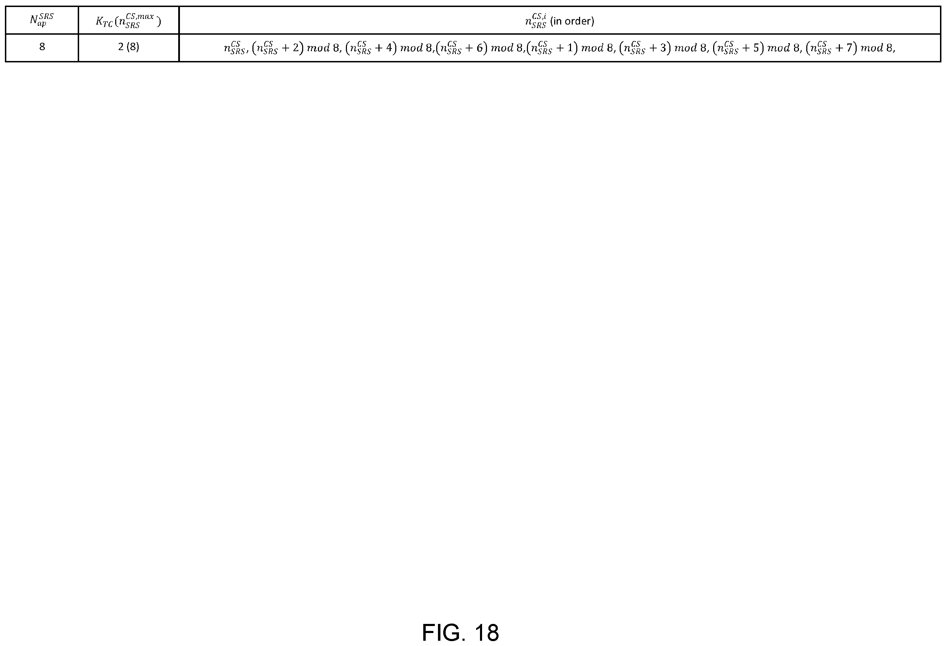

FIG. 18 is a table to show the cyclic shift value $n_{SRS}^{CS,i}$ in option 2-1 of the second aspect. The cyclic shift value $n_{SRS}^{CS,i}$ of FIG. 18 takes the order of the ports into consideration. $n_{SRS}^{CS}$, $(n_{SRS}^{CS} + 2) \bmod 8$, $(n_{SRS}^{CS} + 4) \bmod 8$, and $(n_{SRS}^{CS} + 6) \bmod 8$ correspond to the cyclic shift values of the ports {1000, 1001, 1002, 1003} of Equations (4). $(n_{SRS}^{CS} + 1) \bmod 8$, $(n_{SRS}^{CS} + 3) \bmod 8$, $(n_{SRS}^{CS} + 5) \bmod 8$, and $(n_{SRS}^{CS} + 7) \bmod 8$ correspond to the cyclic shift values of ports {1004, 1005, 1006, 1007} of Equations (4).

The association between the port indexes and the cyclic shift values is not limited to that of Equations (4). In other words, existing order (for example, of Rel. 16) may be reused for at least some ports, and a new expression may be used for other ports.

<<Option 2-2>>

As shown in Expression (5), an expression obtained by replacing $N_{ap}^{SRS}$ of the existing expression showing the cyclic shift value $n_{SRS}^{CS,i}$ with $N_{ap}^{SRS}/X$ may be applied. An integer is used for X. X may be defined in a specification for each $N_{ap}^{SRS}$, or may be configured by higher layer signaling (for example, RRC/MAC CE)/physical layer signaling (for example, DCI) to trigger a related SRS. X may be determined depending on the number of ports.

[Math. 5]

$$\text{Equation (5)}$$

$$n_{SRS}^{CS,i} = \left( n_{SRS}^{CS} + \frac{n_{SRS}^{CS,max}(p_i - 1000)}{N_{ap}^{SRS}/X} \right) \bmod n_{SRS}^{CS,max}$$

In option 2-2, the UE applies a certain configured value (X) as an interval of the cyclic shift values of the SRS ports. In option 2-2, an expression obtained by replacing 2 in Equations (4) of option 2-1 with X may be applied. In other words, a different expression may be applied for each port.

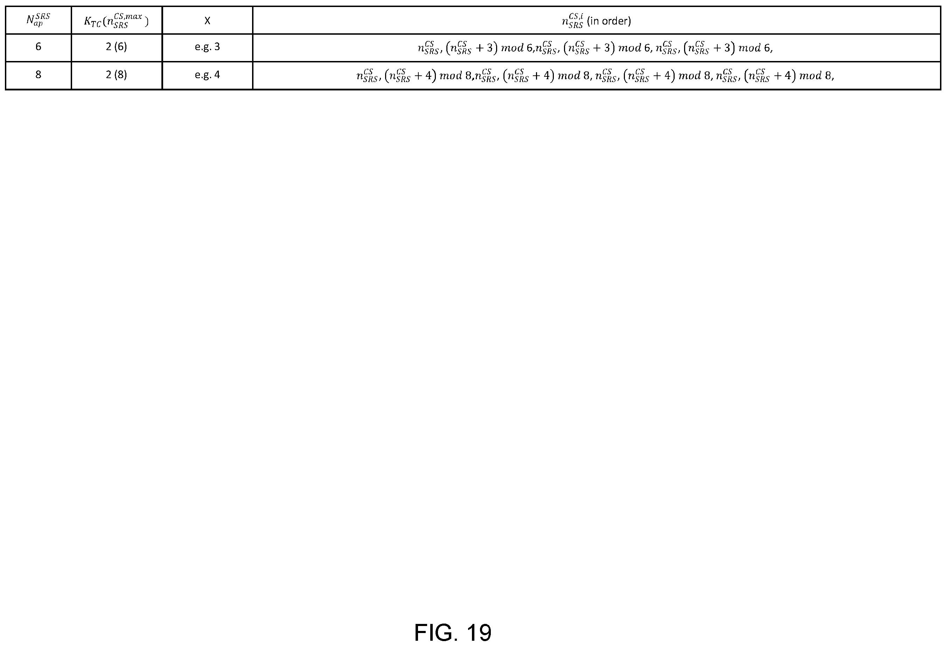

FIG. 19 is a first table to show the cyclic shift value $n_{SRS}^{CS,i}$ in option 2-2 of the second aspect. In the cyclic shift value $n_{SRS}^{CS,i}$ of FIG. 19, a value calculated using Expression (5) is used.

In FIG. 19, the same cyclic shift value is used for a plurality of ports. In other words, multiplexing cannot be performed with only the cyclic shifts, and thus frequency division multiplexing (FDM) may be applied.

Next, as shown in Equations (6), an expression obtained by replacing $N_{ap}^{SRS}$ of the existing expression showing the cyclic shift value $n_{SRS}^{CS,i}$ with $N_{ap}^{SRS}/X$ and further adding a certain value (0 to X - 1) to every one or more ports may be

applied.
[Math. 6]

Equations (6)

$$n_{SRS}^{CS,i} = \left(n_{SRS}^{CS} + \frac{n_{SRS}^{CS,max}(p_i - 1000)}{N_{ap}^{SRS}/X}\right) \bmod n_{SRS}^{CS,max} \text{for ports } \{1000, ..., 1000 + (N_{ap}^{SRS}/X)\text{-}1\},$$

$$n_{SRS}^{CS,i} = \left(n_{SRS}^{CS} + \frac{n_{SRS}^{CS,max}(p_i - 1000)}{N_{ap}^{SRS}/X} + 1\right) \bmod n_{SRS}^{CS,max} \text{ for ports } \{1000 + (N_{ap}^{SRS}/X), ..., 1000 + 2 \cdot (N_{ap}^{SRS}/X)\text{-}1\},$$

...

$$n_{SRS}^{CS,i} = \left(n_{SRS}^{CS} + \frac{n_{SRS}^{CS,max}(p_i - 1000)}{N_{ap}^{SRS}/X} + X - 1\right) \bmod n_{SRS}^{CS,max} \text{for ports } \{1000 + (X-1) \cdot (N_{ap}^{SRS}/X), ..., 1000 + X \cdot (N_{ap}^{SRS}/X)\text{-}1\}$$

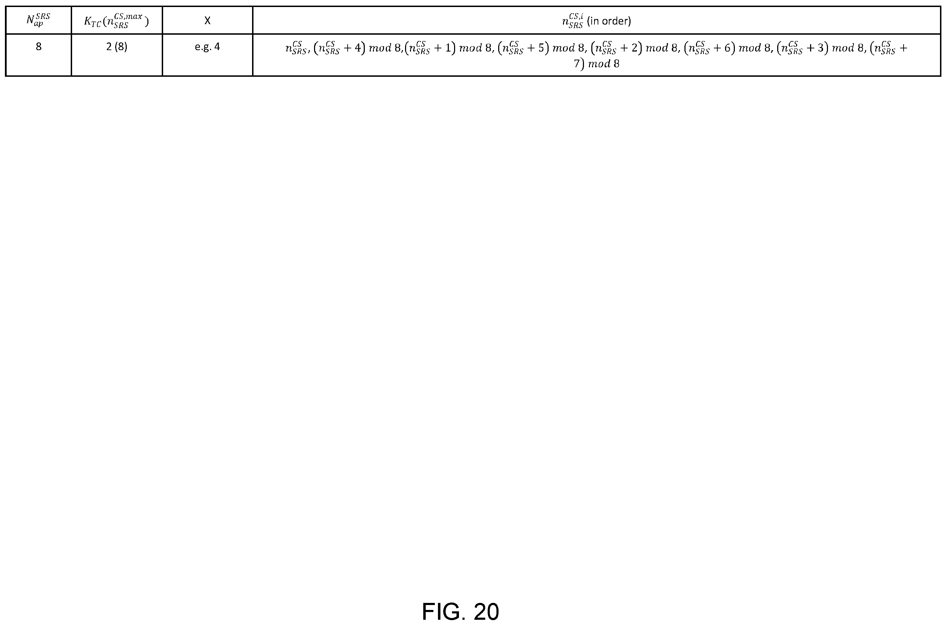

FIG. 20 is a second table to show the cyclic shift value $n_{SRS}^{CS,i}$ in option 2-2 of the second aspect. In the cyclic shift value $n_{SRS}^{CS,i}$ of FIG. 20, a value calculated using Equations (6) is used. $n_{SRS}^{CS}$ and $(n_{SRS}^{CS} + 4) \bmod 8$ are values calculated by using 0 for the certain value in Equations (6), $(n_{SRS}^{CS} + 1) \bmod 8$ and $(n_{SRS}^{CS} + 5) \bmod 8$ are values calculated by using 1 for the certain value in Equations (6), $(n_{SRS}^{CS} + 2) \bmod 8$ and $(n_{SRS}^{CS} + 6) \bmod 8$ are values calculated by using 2 for the certain value in Equations (6), and $(n_{SRS}^{CS} + 3) \bmod 8$ and $(n_{SRS}^{CS} + 7) \bmod 8$ are values calculated by using 3 (X - 1) for the certain value in Equations (6).

According to the example of Equations (6) and FIG. 20, even when the number of ports is large (for example, 6 or more), multiplexing can be performed with only the cyclic shifts.

In the above example, in the present aspect, an example of eight ports is described; however, the present aspect may similarly be applied also to a case of six ports as well. In a case of six ports, the ports {1004, 1005, 1006, 1007} are replaced with ports {1004, 1005}.

According to the present aspect, even when more than four SRS ports (for example, six or eight) are applied, the cyclic shift values can be appropriately calculated.

<Second Embodiment>

The present embodiment will describe extension of comb (comb indexes) to be used. The UE receives a configuration indicating more than four (for example, six or eight) sounding reference signal (SRS) ports and a configuration of comb indexes, and applies different values to the comb index of some SRS ports and the comb index of other SRS ports out of the more than four SRS ports, based on the configuration of the comb indexes.

According to the present embodiment, by extending (increasing) Comb to be used, SRS transmission using more than four ports (for example, six or eight) can be controlled without extension of the cyclic shifts (or with less cyclic extension).

{Aspect 2-1}

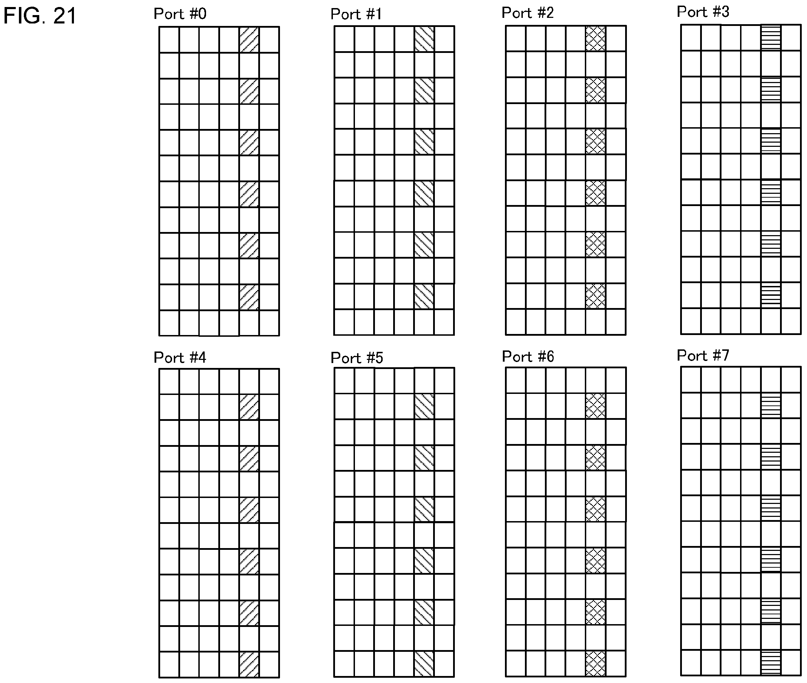

FIG. 21 is a diagram to show SRS allocation in each port when the number of transmission comb is 2. FIG. 21 is an example of an 8-port SRS, in which different comb indexes are used for ports #0 to #3 and ports #4 to #7. The configuration of the comb indexes may be performed by higher layer signaling (for example, RRC)/physical layer signaling, for example. As a method of configuring (determining) the comb indexes, the following options are considered.

<<Option 1-1>>

The UE may receive the configuration of the comb index of some SRS ports by higher layer signaling (for example, RRC) /physical layer signaling, and determine the comb index of other SRS ports, based on the configuration.

When the number of SRS ports is P and the comb index of ports #0 to #(P/2)-1 is configured as X, the UE determines the comb index of ports #P/2 to #P-1 as X+1. Note that ports #0 to #(P/2)-1 may be replaced with ports #10000 to #1000+(P/2)-1. Ports #P/2 to #P-1 may be replaced with ports #1000+(P/2) to #1000+P-1. This similarly applies to other examples.

For example, when the number of SRS ports is 8 (or 6) and the comb index of ports #0 to #3 (or #0 to #2) is configured as X, the UE determines the comb index of ports #4 to #7 (or #3 to #5) as X+1.

<<Variations of Option 1-1>>

When the number of SRS ports is P, the UE may use X for the configured comb index for ports having the port indexes of #(P/2)-1 or smaller, and determine X+1 for the comb index of other ports.

For example, when the number of SRS ports is 8 (or 6), the UE may use X for the configured comb index for ports having the port indexes of #3 (or 2 or smaller) or smaller, and determine X+1 for the comb index of other ports.

<<Option 1-2>>

The UE may receive the configuration of the comb indexes of all of the SRS ports by higher layer signaling (for example, RRC) /physical layer signaling, and use the comb indexes, based on the configuration.

When the number of SRS ports is P, a comb index x used for ports #0 to #(P/2)-1 and a comb index y used for ports #P/2 to #P-1 may be separately configured. For example, when the number of SRS ports is 8 (or 6), the comb index x used for ports #0 to #3 (or ports #0 to #2) and the comb index y used for ports #4 to #7 (or ports #3 to #5) may be separately configured.

<<Option 2-1>>

When the number of SRS ports is P, the UE may use different comb indexes for the comb index to be used for ports #0 to #(P/2)-1 and the comb index to be used to ports #P/2 to #P-1. For example, when the number of SRS ports is 8 (or 6), different comb indexes may be used for the comb index to be used for ports #0 to #3 (or #0 to #2) and the comb index to be used for ports #4 to #7 (or #3 to #5).

<<Option 2-2>>

The UE may use different comb indexes for the SRS ports (SRS ports #0, #2, ...) having even-numbered indexes and the SRS ports (SRS ports #1, #3, ...) having odd-numbered indexes.

For example, the UE may receive the configuration of the comb index of the SRS ports having even-numbered (or odd-numbered) indexes by higher layer signaling/physical layer signaling, and determine the comb index of the odd-numbered (or even-numbered) SRS ports, based on the configuration. Alternatively, the UE may separately receive the configurations of the comb indexes of the SRS ports having even-numbered and odd-numbered indexes by higher layer signaling/physical layer signaling.

<<Option 3-1>>

The UE may transmit the SRSs of all of the ports in the same (one) symbol (or the same symbol set).

<<Option 3-2>>

The UE may transmit only the SRS of some ports in the same (one) symbol (or the same symbol set), and transmit the SRS of other ports in another symbol (or another symbol set).

<<Option 4-1>>

The UE may use the same transmission power for SRS transmissions in different symbols. The present option may be applied in combination with option 3-2 above.

<<Option 4-2>>

The UE may apply the same spatial relation (or spatial domain filter/spatial filter) for SRS transmissions in different symbols. The present option may be applied in combination with option 3-2 above.

{Aspect 2-2}

The following will describe an example of using a larger number of (for example, two or more) symbols and reusing existing SRS ports to implement SRS transmission using a large number of (for example, six or more) ports.

<<Option 1-1>>

The UE may transmit the SRS of some SRS ports in one symbol and transmit the SRS of other SRS ports in another symbol, out of more than four SRS ports. For example, the UE may transmit the SRS of SRS ports #0 to #3 (or #0 to #2) in one symbol (or one symbol set), and transmit SRS ports #4 to #7 (or #4 to #5) in another symbol (or another symbol set).

<<Option 1-2>>

The UE may reuse the combs/cyclic shifts of some ports (ports supported in existing specifications) in SRS transmission of other ports. For example, the UE may receive the configuration of the combs/cyclic shifts of SRS ports #0 to #3, and reuse the same combs/cyclic shifts as SRS ports #0 to #3 in SRS transmission of SRS ports #4 to #7. In this case, the symbols (or the symbol sets) used in SRS transmission of SRS ports #0 to #3 and SRS transmission of SRS ports #4 to #7 need not overlap each other (may be different).

<<Option 2-1>>

The UE may separately (independently) receive the configuration of the symbol indexes of some SRS ports and the configuration of the symbol indexes of other SRS ports by higher layer signaling/physical layer signaling. For example, the UE may be independently configured with the configuration of the symbol indexes of SRS ports #0 to #3 and the symbol indexes of SRS ports #4 to #7.

<<Option 2-2>>

The UE may receive the configuration of the symbol indexes of some SRS ports by higher layer signaling/physical layer signaling, and determine the symbol indexes of other SRS ports, based on the configuration.
For example, the UE may be configured with the symbol indexes of SRS ports #0 to #3, and determine the symbol indexes of SRS ports #4 to #7, based on the configured symbol indexes of SRS ports #0 to #3. For example, the UE may be configured with symbol #n for SRS transmission of SRS ports #0 to #3, and determine symbol #(n+k) for SRS transmission of SRS ports #4 to #7. k may be a fixed value (e.g., 1), or the same numerical value as a repetition factor may be used.

<<Option 2-3>>

The UE may determine (may be configured) to perform SRS transmission of the SRS ports having different comb numbers in different symbols.
Although the present aspect has described a case of eight ports, SRS ports #0 to #3 are replaced with SRS ports #0 to #2, and SRS ports #4 to #7 are replaced with SRS ports #3 to #5 in a case of six ports.

{Aspect 2-3}

Aspect 2-3 will describe an example of a combination of the first embodiment and aspect 2-1. When the UE performs SRS transmission using a large number of (for example, six or more) ports, the UE may multiplex the SRS of each port using the cyclic shifts and use a plurality of combs. Each option of aspect 2-1 may also be applied similarly in the present aspect. For example, the UE may multiplex the SRS, using the same number of cyclic shifts as the number of SRS ports.

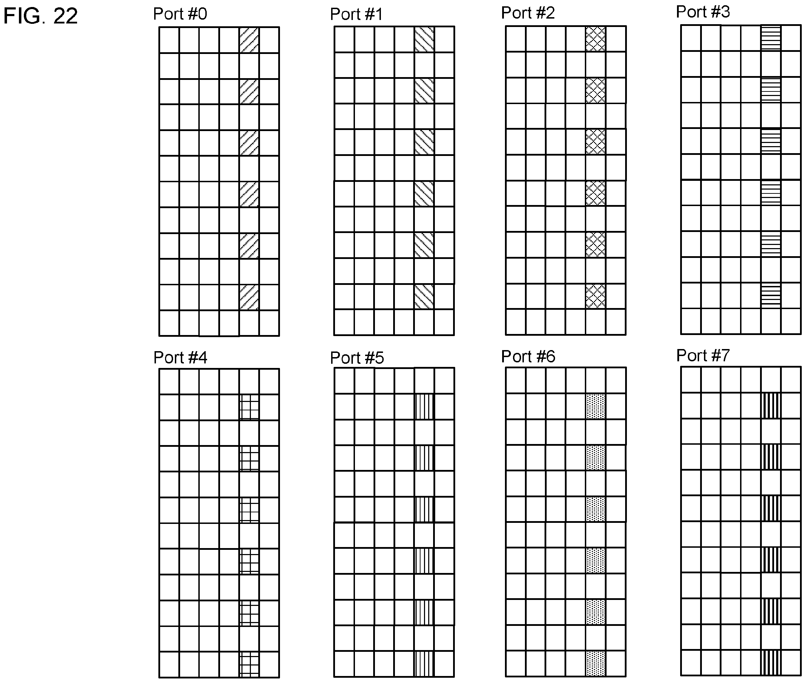

FIG. 22 is a diagram to show SRS allocation in aspect 2-3. FIG. 22 is an example of an 8-port SRS, in which different comb indexes are used for ports #0 to #3 and ports #4 to #7. For ports #0 to #7, cyclic shift using different cyclic shift values is performed. In other words, the UE multiplexes the SRS, using the same number of cyclic shifts as the number of SRS ports.
In the example of FIG. 22, the number of ports to be multiplexed for each comb is the same (four ports), but the number may be different.
In aspect 2-3, not only different combs are used but also different cyclic shift values are applied for a plurality of ports, and therefore interfere can be reduced.

{Aspect 2-4}

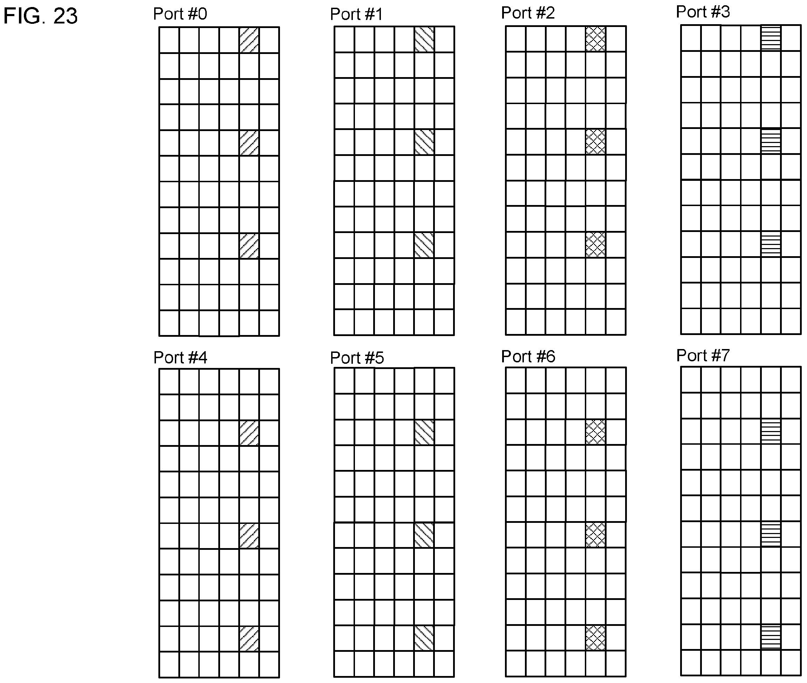

FIG. 23 is a diagram to show SRS allocation in each port when the number of transmission comb is 4. FIG. 23 is an example of an 8-port SRS, in which different comb indexes are used for ports #0 to #3 and ports #4 to #7. The configuration of the comb indexes may be performed by higher layer signaling)/physical layer signaling, for example. As a method of configuring (determining) the comb indexes, the following options are considered. Each option of aspect 2-1 may also be applied similarly in the present aspect.

<<Option 1-1>>

The UE may receive the configuration of the comb index of some SRS ports by higher layer signaling/physical layer signaling, and determine the comb index of other SRS ports, based on the configuration.

When the number of SRS ports is P and the comb index of ports #0 to #(P/2)-1 is configured as X, the UE determines the comb index of ports #P/2 to #P-1 to any one of X+1, X+2, and X+3.

For example, when the number of SRS ports is 8 (or 6) and the comb index of ports #0 to #3 (or #0 to #2) is configured as X, the UE determines the comb index of ports #4 to #7 (or #3 to #5) to any one of X+1, X+2, and X+3.

When the number of SRS ports is P, the UE may use X for the configured comb index for ports having the port indexes of #(P/2)-1 or smaller, and determine any one of X+1, X+2, and X+3 for the comb index of other ports.

For example, when the number of SRS ports is 8 (or 6), the UE may use X for the configured comb index for ports having the port indexes of #3 (or 2 or smaller) or smaller, and determine any one of X+1, X+2, and X+3 for the comb index of other ports.

<<Option 1-2>>

The UE may receive the configuration of the comb indexes of all of the SRS ports by higher layer signaling (for example, RRC) /physical layer signaling, and use the comb indexes, based on the configuration.

When the number of SRS ports is P, a comb index x used for ports #0 to #(P/2)-1 and a comb index y used for ports #P/2 to #P-1 may be separately configured. For example, when the number of SRS ports is 8 (or 6), the comb index x used for ports #0 to #3 (or ports #0 to #2) and the comb index y used for ports #4 to #7 (or ports #3 to #5) may be separately configured.

{Aspect 2-5}

Aspect 2-5 will describe an example of a combination of the first embodiment and aspect 2-4. When the UE performs SRS transmission using a large number of (for example, six or more) ports, the UE may multiplex the SRS of each port using the cyclic shifts and use a plurality of combs (comb4).

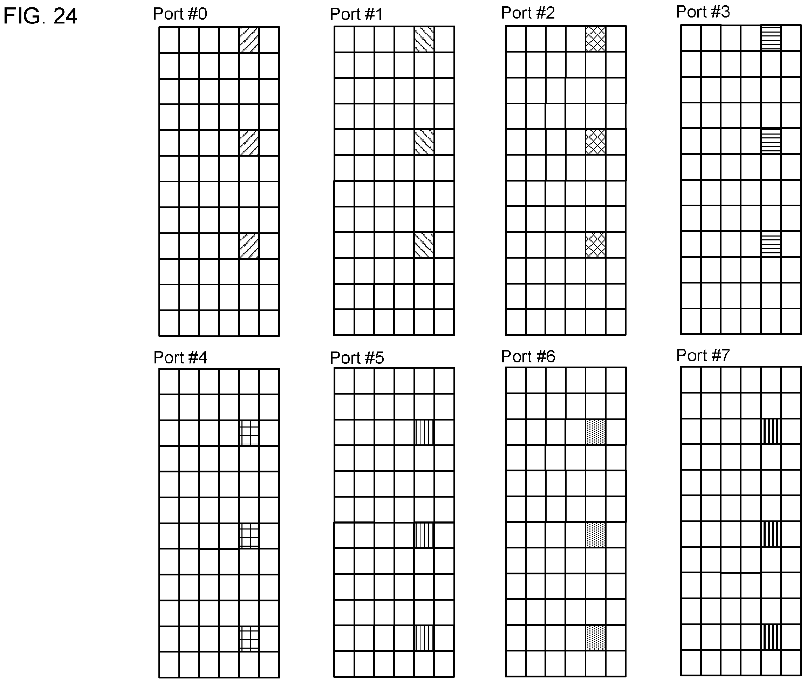

FIG. 24 is a diagram to show a first example of SRS allocation in aspect 2-5. FIG. 24 is an example of an 8-port SRS, in which a comb index x is configured for ports #0 to #3, and a comb index X+2 is configured for ports #4 to #7. In other words, different comb indexes are used for every four ports. For ports #0 to #7, different cyclic shift values are used. The UE may determine the comb index of ports #4 to #7, based on the comb index of ports #0 to #3.

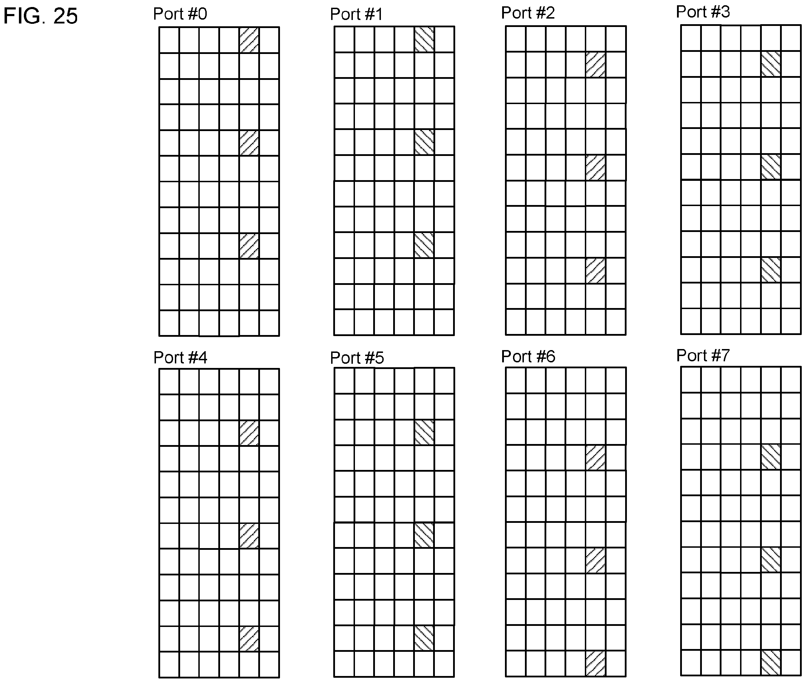

FIG. 25 is a diagram to show a second example of SRS allocation in aspect 2-5. FIG. 25 is an example of an 8-port SRS, in which a comb index X is configured for ports #0 and #1, a comb index X+1 is configured for ports #2 and #3, a comb index X+2 is configured for ports #4 and #5, and a comb index X+3 is configured for ports #6 and #7. In other words, different comb indexes are used for every two ports. The UE may determine the comb index of ports #2 to #7, based on the comb index of ports #0 and #1.

In FIG. 25, the same cyclic shift value is used for ports #0, #2, #4, and #6, and the same cyclic shift value is used for ports #1, #3, #5, and #7. Note that different cyclic shift values may be used for ports #0 to #7.

In the examples of FIGS. 24 and 25, the number of ports to be multiplexed for each comb is the same (two ports), but the number may be different.

{Aspect 2-6}

In aspect 2-6, when the UE performs SRS transmission, using a large number of (for example, six or more) ports, the UE multiplexes the SRS of each port by the cyclic shifts and uses a plurality of combs (comb8).

<<Option 1-1>>

When the comb index of some SRS ports is configured as X, the UE may determine any one of X+1, X+2, X+3, X+4, X+5, X+6, and X+7 for the comb index of other SRS ports.

For example, when the number of SRS ports is 8 (or 6) and the comb index of ports #0 to #3 (or #0 to #2) is configured as X, the UE determines any one of X+1, X+2, X+3, X+4, X+5, X+6, and X+7 for the comb index of ports #4 to #7 (or #3 to #5).

For example, when the number of SRS ports is 8 (or 6), the UE may use X for the configured comb index for ports having the port indexes of #3 (or 2 or smaller) or smaller, and determine any one of X+1, X+2, X+3, X+4, X+5, X+6, and X+7 for the comb index of other ports.

The UE may determine two or more types of comb indexes out of X+1, X+2, X+3, X+4, X+5, X+6, and X+7 for the comb indexes of other ports.

<<Option 1-2>>

When the number of SRS ports is 8 (or 6), the comb index x used for ports #0 to #3 (or ports #0 to #2) and the comb index y used for ports #4 to #7 (or ports #3 to #5) may be separately configured.

Note that the number of ports to be multiplexed for each comb is the same (two ports), but the number may be different. Two or more types of combs may be applied.

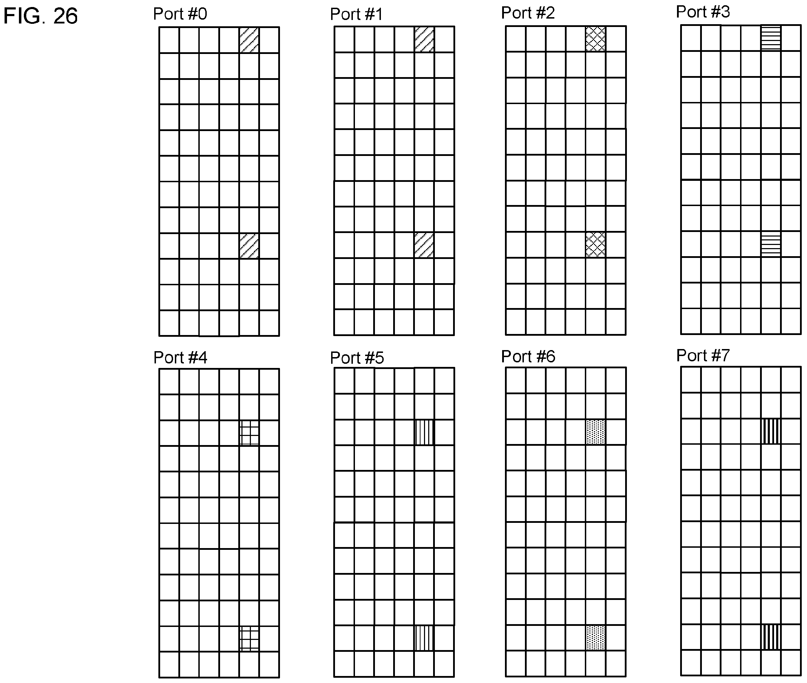

FIG. 26 is a diagram to show a first example of SRS allocation in aspect 2-6. FIG. 26 is an example of an 8-port SRS, in which the UE is configured with a comb index X for ports #0 to #3, and determines X+2 for the comb index of ports #4 to #7. In other words, different comb indexes are used for every four ports. For ports #0 to #7, different cyclic shift values are used.

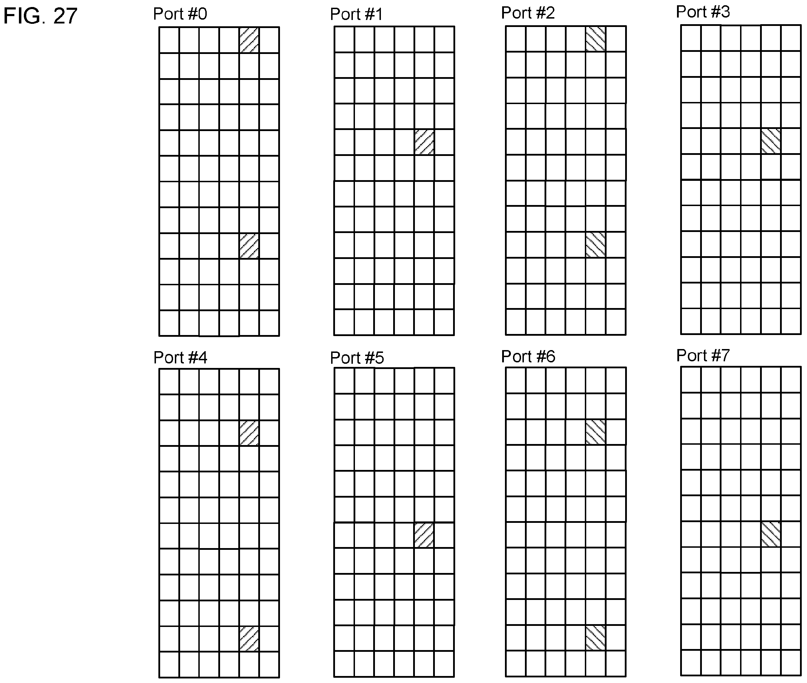

FIG. 27 is a diagram to show a second example of SRS allocation in aspect 2-6. FIG. 27 is an example of an 8-port SRS, in which the UE is configured with a comb index X for ports #0 and #2, a comb index X+4 for ports #1 and #3, a comb index X+2 for ports #4 and #6, and a comb index X+6 for ports #5 and #7. In other words, different comb indexes are used for every two ports. The UE may determine the comb index of other ports, based on the comb index of ports #0 and #2, for example.

In FIG. 27, the same cyclic shift value is used for ports #0, #1, #4, and #5, and the same cyclic shift value is used for ports #2, #3, #6, and #7. Note that different cyclic shift values may be used for ports #0 to #7.

Note that each example of aspects 2-3 to 2-6 may be combined with at least one option of aspects 2-1 and 2-2.

{Aspect 2-7}

The present aspect will describe a comb offset to be used at the resource start position in the frequency direction. The UE applies resource start positions (comb offsets) in different frequency directions for SRS transmission from some SRS ports and SRS transmission from other SRS ports out of more than four SRS ports. Note that, in each expression, notation of [100X] indicates that 100X may be omitted.

<<Option 1>>

The existing expression (for example, of Rel. 16) may be reused regarding ports {1000, 1001, 1002, 1003}, and a new expression may be used regarding ports {1004, 1005 [, 1006, 1007]}. The expression is not changed for existing ports, and thus implementation of the UE can be less affected.

Expression (7) shows another example of the comb offset $k_{TC}^{p\_i}$ used for the resource start position $k_0^{p\_i}$ in the frequency direction shown in Expression (2) when the number of SRS ports is 8. The same comb may be shared regarding ports {1000, 1001, 1002, 1003}, and other comb (that is, comb to which $+K_{TC}/2$ is applied) may be shared regarding new ports {1004, 1005 [, 1006, 1007]}. The present option may be applied only applied only to case C described above.
[Math. 7]

Equation (7)

$$k_{TC}^{p_i} = \begin{cases} k_{TC}^{p_i} = (\bar{k}_{TC} + K_{TC}/2) \bmod K_{TC} & \text{if } N_{ap}^{SRS} = 6 \text{ and/or } 8, \ p_i \in \{1004, 1005[, 1006, 1007]\} \\ \bar{k}_{TC} & \text{otherwise} \end{cases}$$

Expression (8) shows another example of the parameter $k_{TC}^{p\_i}$ used for the resource start position $k_0^{p\_i}$ in the frequency direction shown in Expression (2) when the number of SRS ports is 6. The same comb may be shared regarding ports {1000, 1001, 1002}, and other comb (that is, comb to which $+K_{TC}/2$ is applied) may be shared regarding new ports {1003, 1004, 1005}. The present option may be applied only to case C described above.
[Math. 8]

Equation (8)

$$k_{TC}^{p_i} = \begin{cases} (\bar{k}_{TC} + K_{TC}/2)\, mod\ K_{TC} & \text{if } N_{ap}^{SRS} = 6 \ and/or\ 8,\ p_i \in \{1003, 1004, 1005\} \\ \bar{k}_{TC} & \text{otherwise} \end{cases}$$

When the number of SRS ports is 6, Expression (8) may be applied, or an expression without [, 1006, 1007] in Expression (7) may be applied.

<<Option 2>>

To cover all of the ports {1000, ..., 1005 [, 1006, 1007]}, the existing expression (for example, of Rel. 16) may be reused. For example, as shown in Expression (9), even-numbered (or odd-numbered) ports may share the same comb, and odd-numbered (or even-numbered) ports may share other comb (+$K_{TC}$/2). The present option may be applied only to case A/B described above. The present option has an advantage that the UE has small implementation. In Expression (9), {1001, 1003, 1005, [1007]} may be replaced with {1000, 1002, 1004, [1006]}.
[Math. 9]

Equation (9)

$$k_{TC}^{p_i} = \begin{cases} (\bar{k}_{TC} + K_{TC}/2)\, mod\ K_{TC} & \text{if } N_{ap}^{SRS} = 6 \ and/or\ 8,\ p_i \in \{1001, 1003, 1005[, 1007]\} \\ \bar{k}_{TC} & \text{otherwise} \end{cases}$$

Alternatively, the same comb may be shared for every specific number of (X) ports. X may be fixed for every maximum number of ports, or may be configured for the UE by higher layer signaling/physical layer signaling. For example, the UE may be indicated with at least one of X values configured by RRC, using MAC CE/DCI. For example, when the maximum number of ports is 6, X may be 3, and when the maximum number of ports is 8, X may be 2.

<Third Embodiment>

The UE may apply a time domain orthogonal cover code (TD-OCC) to the SRS to be transmitted from more than four SRS ports in a plurality of symbols.

<<Option 1>>

For example, when the UE transmits the SRS across two symbols, the UE may apply different TD-OCCs to the respective symbols. The UE may determine codes of the TD-OCC, based on TD-OCC indexes.

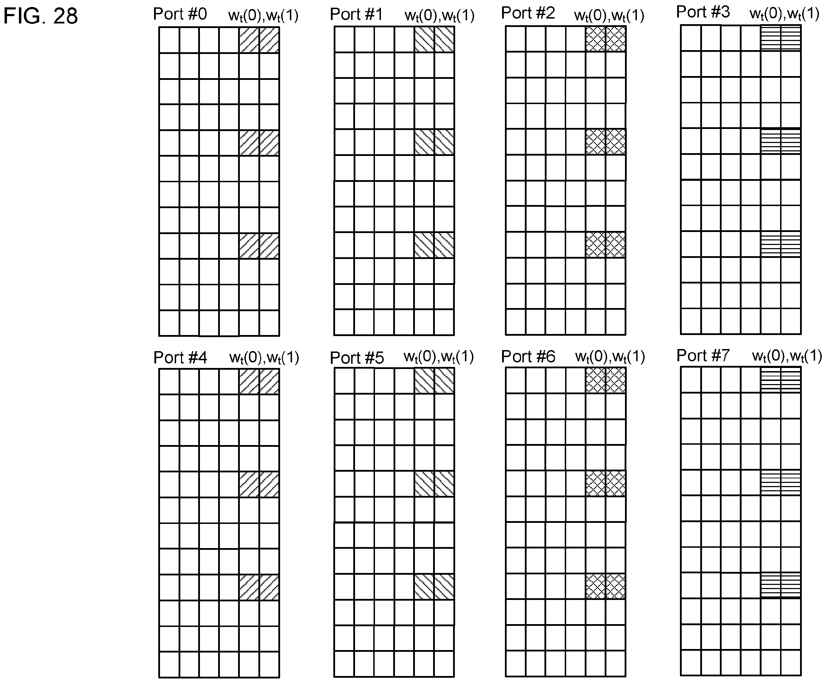

FIG. 28 is a diagram to show an example in which the number of SRS ports is 8 and the SRS is allocated to two symbols. The UE applies wt(0) as the TD-OCC to a first symbol used for SRS transmission, and applies wt(1) as the TD-OCC to a second symbol. Specific values of wt(0) and wt(1) will be described later. Note that the number of ports, the number of combs, and the number of symbols when the TD-OCC is applied are not limited to those of the example of FIG. 28.

<<Option 2-1>>

The UE may receive a configuration of a TD-OCC index x corresponding to the SRS of the first symbol by higher layer signaling/physical layer signaling, and determine the TD-OCC index (for example, x+1) of the second SRS symbol, based on the configuration.

<<Option 2-2>>

The UE may receive a configuration of a TD-OCC index x corresponding to the SRS of even-numbered (or odd-numbered) (absolute/relative) symbols by higher layer signaling/physical layer signaling, and determine the TD-OCC index (for example, x+1) of odd-numbered (or even-numbered) (absolute/relative) symbols, based on the configuration.

<<Option 2-3>>

The UE may receive a configuration of a plurality of TD-OCC indexes (e.g., x and y) for a plurality of SRS symbols by higher layer signaling/physical layer signaling, and apply the TD-OCCs to the SRS, based on the configuration.

<<Option 3>>

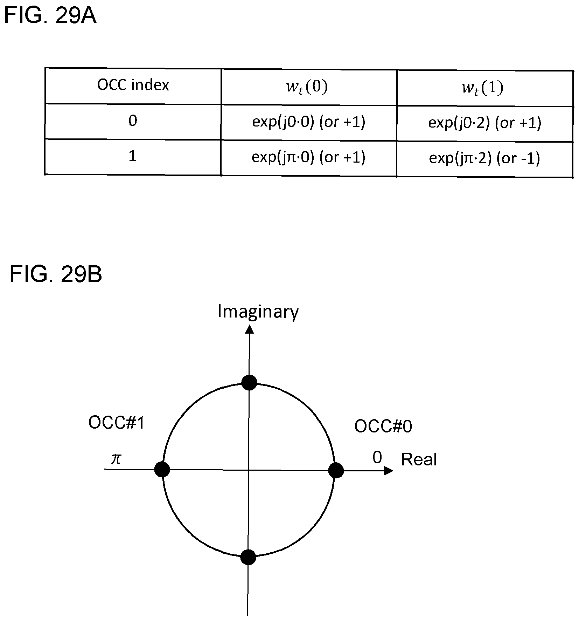

FIG. 29A and FIG. 29B are diagrams to show examples of a relationship between the TD-OCC indexes and the codes of the TD-OCC. A case of TD-OCC index = 0 of FIG. 29A corresponds to OCC #0 of FIG. 29B. A case of TD-OCC index = 1 of FIG. 29B corresponds to OCC #1 of FIG. 29B. In other words, phase shift of $\pi$ is applied. An OCC code with cyclic shift of $\{0, -\pi\}$ may be used.

TD-OCC may be applicable only when the number of repetitions (nrofSymbols) of the SRS is a multiple of 2. With this, even when the SRS is repeated, reduction of SRS capacity is caused to be less. Frequency hopping need not be performed among the SRS symbols to which $w_t(0)$ and $w_t(1)$ are applied.

<Additional Notes>

Each example of the present disclosure may be applied to the SRS (e.g., Rel-15/16/17 SRS) with four ports or less. For example, it may be applied when the SRS with four ports or less is multiplexed among a plurality of users (UEs). For example, when the maximum number of ports used by one UE for SRS transmission is 4, the TD-OCC of the third embodiment may be supported. By applying the TD-OCC, multiplexing of SRS transmission among a plurality of users can be implemented. By applying multiplexing using the TD-OCC, the number of terminals that can share the same time and frequency resources can be increased without increasing the number of ports.

The UE may be able to simultaneously transmit SRS resources in different SRS resource sets.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

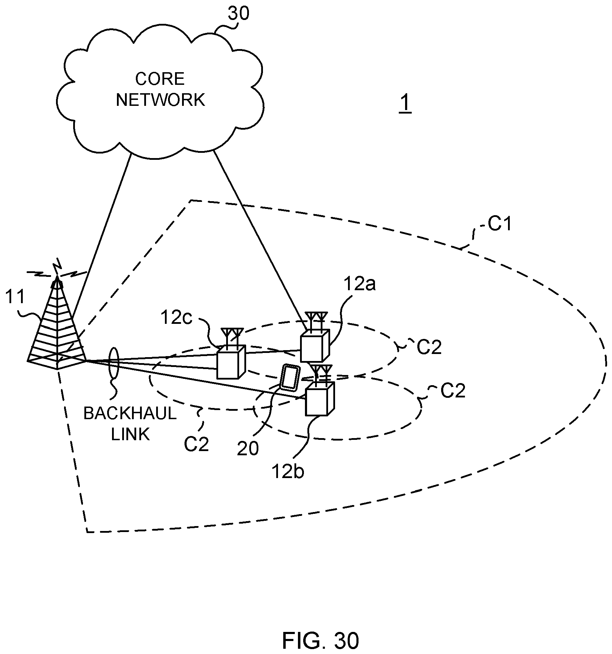

FIG. 30 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, and 5G.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be communicated as an uplink reference signal (UL-RS). Note that DMRS may be referred to as a "user terminal specific reference signal (UE-specific Reference Signal)."

(Base Station)

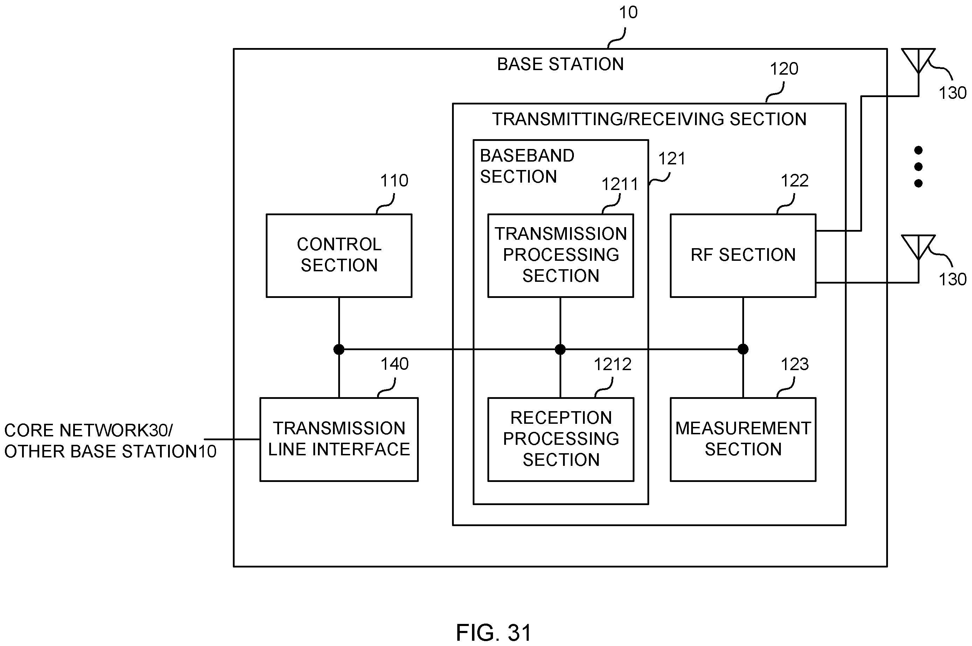

FIG. 31 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may transmit a configuration indicating a larger number of sounding reference signal (SRS) ports. The control section 110 may control reception of an SRS, using the more than four SRS ports.

The transmitting/receiving section 120 may transmit a configuration indicating more than four sounding reference signal (SRS) ports and a configuration of a comb index. The control section 110 may control reception of an SRS from the more than four SRS ports, with different values being applied to the comb index of some SRS ports and the comb index of other SRS ports out of the more than four SRS ports, based on the configuration of the comb index.

(User Terminal)

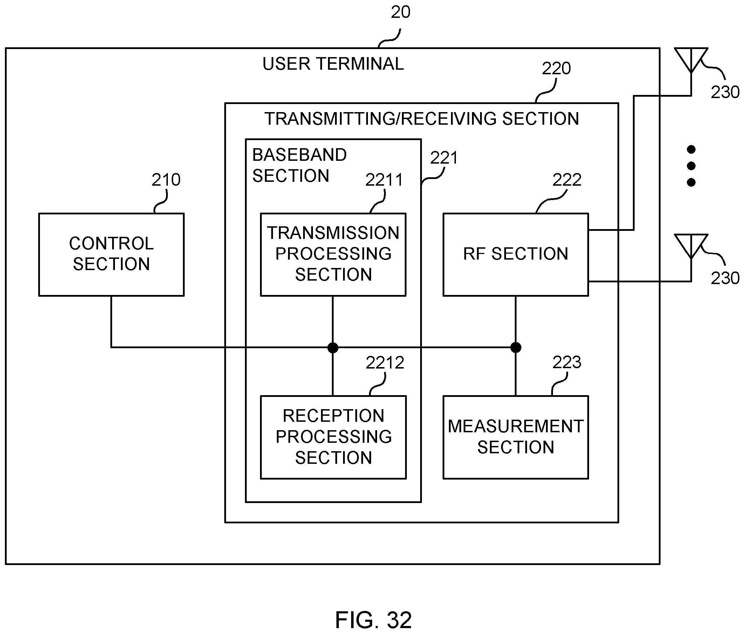

FIG. 32 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may receive a configuration indicating more than four sounding reference signal (SRS) ports. The control section 210 may control transmission of an SRS, using the more than four SRS ports.

The control section 210 may multiplex the SRS, using a same number of cyclic shifts as a number of the SRS ports. The control section 210 may apply a maximum number of cyclic shifts being a multiple of a number of the SRS ports. The control section 210 may calculate a cyclic shift value, using different methods for some SRS ports and other SRS ports out of the more than four SRS ports.

The transmitting/receiving section 220 may receive a configuration indicating more than four sounding reference signal (SRS) ports and a configuration of a comb index. The control section 210 may apply different values to the comb index of some SRS ports and the comb index of other SRS ports out of the more than four SRS ports, based on the configuration of the comb index.

The transmitting/receiving section 220 may transmit an SRS of some SRS ports in one symbol and transmit the SRS of other SRS ports in another symbol, out of the more than four SRS ports. The control section 210 may apply resource start positions in different frequency directions for SRS transmission from some SRS ports and SRS transmission from other SRS ports out of the more than four SRS ports. The control section 210 may apply a time domain orthogonal cover code (TD-OCC) to an SRS to be transmitted from the more than four SRS ports in a plurality of symbols.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

For example, a base station, a user terminal, and so on according to one embodiment of the present disclosure may function as a computer that executes the processes of the radio communication method of the present disclosure.

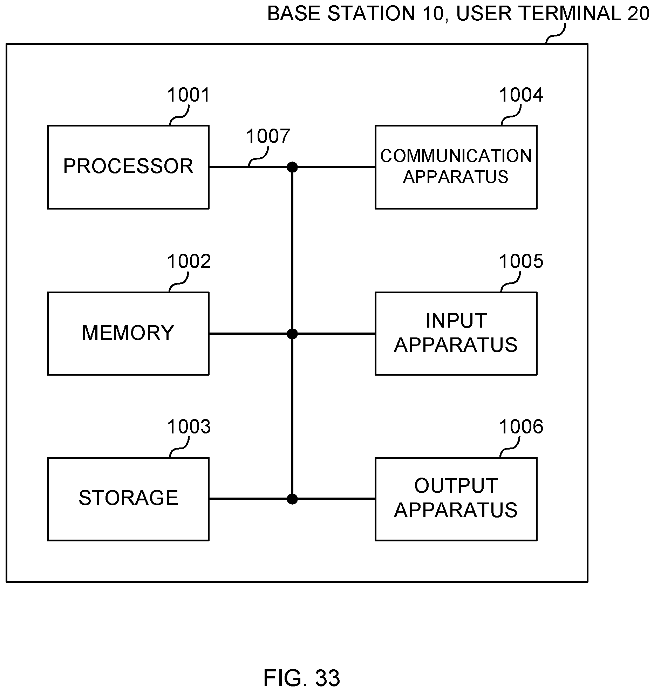

FIG. 33 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indexes.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs).

Also, notification of certain information (for example, notification of "X holds") does not necessarily have to be notified explicitly, and can be notified implicitly (by, for example, not notifying this certain information or notifying another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

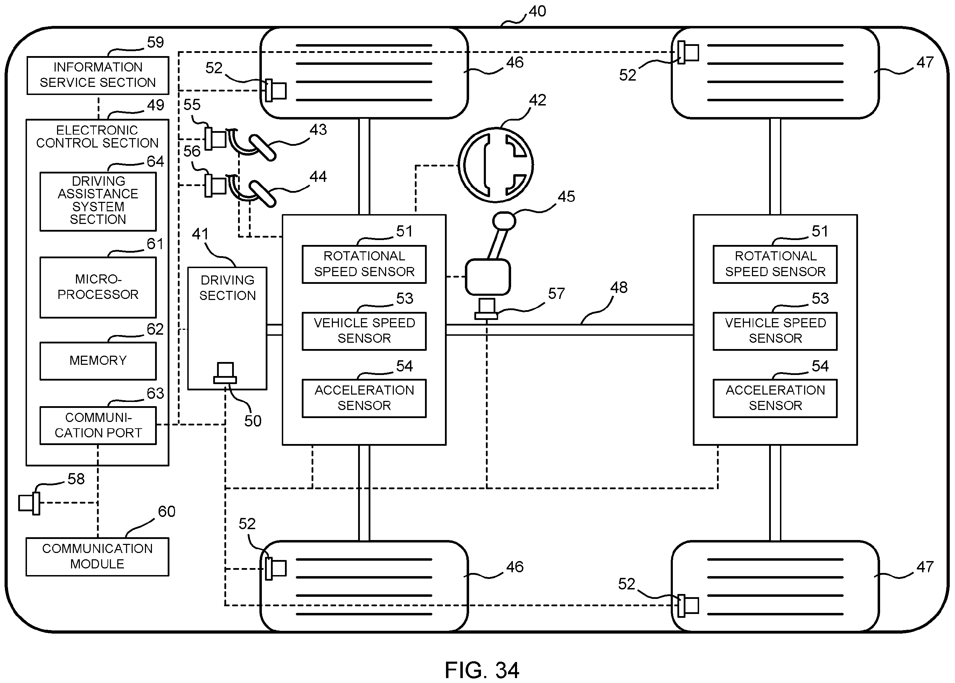

FIG. 34 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/-multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a receiving section that receives a configuration indicating more than four sounding reference signal (SRS) ports; and
   a control section that controls transmission of an SRS, using the more than four SRS ports.

2. The terminal according to claim 1, wherein
   the control section multiplexes the SRS, using a same number of cyclic shifts as a number of the SRS ports.

3. The terminal according to claim 1 or 2, wherein
   the control section applies a maximum number of cyclic shifts being a multiple of a number of the SRS ports.

4. The terminal according to any one of claims 1 to 3, wherein
   the control section calculates a cyclic shift value, using different methods for some SRS ports and other SRS ports out of the more than four SRS ports.

5. A radio communication method for a terminal, the radio communication method comprising:

   receiving a configuration indicating more than four sounding reference signal (SRS) ports; and
   controlling transmission of an SRS, using the more than four SRS ports.

6. A base station comprising:

   a transmitting section that transmits a configuration indicating more than four sounding reference signal (SRS) ports; and
   a control section that controls reception of an SRS, using the more than four SRS ports.

```
SRS-ResourceSet ::=                     SEQUENCE {
    srs-ResourceSetId                       SRS-ResourceSetId,
    srs-ResourceIdList                      SEQUENCE (SIZE(1..maxNrofSRS-ResourcesPerSet)) OF SRS-ResourceId    OPTIONAL, -- Cond Setup
    resourceType                            CHOICE {
        aperiodic                               SEQUENCE {
            aperiodicSRS-ResourceTrigger            INTEGER (1..maxNrofSRS-TriggerStates-1),
            csi-RS                                  NZP-CSI-RS-ResourceId                       OPTIONAL, -- Cond NonCodebook
            slotOffset                              INTEGER (1..32)                             OPTIONAL, -- Need S
            ...,
            [[
            aperiodicSRS-ResourceTriggerList                SEQUENCE (SIZE(1..maxNrofSRS-TriggerStates-2))
                                                                OF INTEGER (1..maxNrofSRS-TriggerStates-1)    OPTIONAL  -- Need M
            ]]
        },
        semi-persistent                         SEQUENCE {
            associatedCSI-RS                        NZP-CSI-RS-ResourceId                       OPTIONAL, -- Cond NonCodebook
            ...
        },
        periodic                                SEQUENCE {
            associatedCSI-RS                        NZP-CSI-RS-ResourceId                       OPTIONAL, -- Cond NonCodebook
            ...
        }
    },
    usage                                   ENUMERATED {beamManagement, codebook, nonCodebook, antennaSwitching},
    alpha                                   Alpha                                           OPTIONAL, -- Need S
    p0                                      INTEGER (-202..24)                              OPTIONAL, -- Cond Setup
    pathlossReferenceRS                     PathlossReferenceRS-Config                      OPTIONAL, -- Need M
    srs-PowerControlAdjustmentStates        ENUMERATED { sameAsFci2, separateClosedLoop}    OPTIONAL, -- Need S
    ...,
    [[
    pathlossReferenceRSList-r16             SetupRelease { PathlossReferenceRSList-r16}      OPTIONAL  -- Need M
    ]]
}
```

RESOURCE
TYPE

USAGE

EP 4 503 697 A1

FIG. 1

EP 4 503 697 A1

```
SRS-Resource ::=                     SEQUENCE {
    srs-ResourceId                       SRS-ResourceId,
    nrofSRS-Ports                        ENUMERATED {port1, ports2, ports4},     }  SUPPORT OF PLURALITY OF PORTS
    ptrs-PortIndex                       ENUMERATED {n0, n1 }
    transmissionComb                     CHOICE {
        n2                                   SEQUENCE {
            combOffset-n2                        INTEGER (0..1),
            cyclicShift-n2                       INTEGER (0..7)
        },                                                                       }  CONFIGURATION RELATED TO TRANSMISSION comb
        n4                                   SEQUENCE {
            combOffset-n4                        INTEGER (0..3),
            cyclicShift-n4                       INTEGER (0..11)
        }
    },
    resourceMapping                      SEQUENCE {
        startPosition                        INTEGER (0..5),                      }  TIME DOMAIN ALLOCATION
        nrofSymbols                          ENUMERATED {n1, n2, n4},
        repetitionFactor                     ENUMERATED {n1, n2, n4}
    },
    freqDomainPosition                   INTEGER (0..67),                         }  FREQUENCY DOMAIN ALLOCATION
    freqDomainShift                      INTEGER (0..268),
    freqHopping                          SEQUENCE {
        c-SRS                                INTEGER (0..63),                     }  HOPPING RELATED INFORMATION
        b-SRS                                INTEGER (0..3),
        b-hop                                INTEGER (0..3)
    },
    groupOrSequenceHopping               ENUMERATED { neither, groupHopping, sequenceHopping },
    resourceType                         CHOICE {
        aperiodic                            SEQUENCE {
            ...
        },
        semi-persistent                      SEQUENCE {
            periodicityAndOffset-sp                  SRS-PeriodicityAndOffset,
            ...
        },
        periodic                             SEQUENCE {
            periodicityAndOffset-p                   SRS-PeriodicityAndOffset,
            ...
        }
    },
    sequenceId                           INTEGER (0..1023),
    spatialRelationInfo                  SRS-SpatialRelationInfo
    ...,
    [[
    resourceMapping-r16                  SEQUENCE {
        startPosition-r16                    INTEGER (0..13),
        nrofSymbols-r16                      ENUMERATED {n1, n2, n4},
        repetitionFactor-r16                 ENUMERATED {n1, n2, n4}
    }
    ]]
```

FIG. 2

EP 4 503 697 A1

$m_{SRS,0}=48$ [RBs]

$B_{SRS}=0$

$m_{SRS,1}=24$ [RBs]

$B_{SRS}=1$

$N_1=1$

$m_{SRS,2}=12$ [RBs]

$B_{SRS}=2$

$N_2=2$

$m_{SRS,3}=4$ [RBs]

$B_{SRS}=3$

$N_3=3$

FIG. 3

FREQUENCY

SRS

HOPPING BANDWIDTH

SRS BANDWIDTH

. . .

. . .

TIME

SLOT

FIG. 4

EP 4 503 697 A1

FREQUENCY

SRS

24 RBs

...

TIME

SLOT

FIG. 5

FIG. 6

EP 4 503 697 A1

FREQUENCY

RPFS SRS

$m_{SRS,BSRS}[RB]$

$1/P_F * m_{SRS,BSRS}[RB]$

$N_{offset}=k_F/P_F * m_{SRS,BSRS}[RB]$

$k_F=\{0,1, ..., P_F-1\}$

TIME

FIG. 7

| $K_{TC}$ | $n_{SRS}^{cs,max}$ |
|---|---|
| 2 | 8 |
| 4 | 12 |
| 8 | 6 |

FIG. 8

| $N_{ap}^{SRS}$ | $K_{TC}\left(n_{SRS}^{CS,max}\right)$ | $n_{SRS}^{CS,i}$ |
|---|---|---|
| 2 | 2 (8) | $n_{SRS}^{CS}, \left(n_{SRS}^{CS} + 4\right) \bmod 8$ |
| 2 | 4 (12) | $n_{SRS}^{CS}, \left(n_{SRS}^{CS} + 6\right) \bmod 12$ |
| 2 | 8 (6) | $n_{SRS}^{CS}, \left(n_{SRS}^{CS} + 3\right) \bmod 6$ |

FIG. 9

| $N_{ap}^{SRS}$ | $K_{TC}(n_{SRS}^{CS,max})$ | $n_{SRS}^{CS,i}$ |
|---|---|---|
| 4 | 2 (8) | $n_{SRS}^{CS}, \left(n_{SRS}^{CS} + 2\right) \bmod 8, \left(n_{SRS}^{CS} + 4\right) \bmod 8, \left(n_{SRS}^{CS} + 6\right) \bmod 8$ |
| 4 | 4 (12) | $n_{SRS}^{CS}, \left(n_{SRS}^{CS} + 3\right) \bmod 12, \left(n_{SRS}^{CS} + 6\right) \bmod 12, \left(n_{SRS}^{CS} + 9\right) \bmod 12$ |
| 4 | 8 (6) | $n_{SRS}^{CS}, n_{SRS}^{CS}, \left(n_{SRS}^{CS} + 3\right) \bmod 6, \left(n_{SRS}^{CS} + 3\right) \bmod 6$ |

FIG. 10

| $N_{ap}^{SRS}$ | $K_{TC}(n_{SRS}^{CS,max})$ | $k_{TC}^{p_i}$ |
|:---:|:---:|:---:|
| 2 | - | $\bar{k}_{TC}$ (CS-only) |

FIG. 11

| $N_{ap}^{SRS}$ | $K_{TC}(n_{SRS}^{CS,max})$ | $n_{SRS}^{CS}$ | $k_{TC}^{p_i}$ |
|---|---|---|---|
| 4 | 2 (8) | {0,1,2,3} | $\bar{k}_{TC}$ (CS-only) |
| 4 | 2 (8) | {4,5,6,7} | $\bar{k}_{TC}, \bar{k}_{TC}+1, \bar{k}_{TC}, \bar{k}_{TC}+1$ |
| 4 | 4 (12) | {0,1,2,3,4,5} | $\bar{k}_{TC}$ (CS-only) |
| 4 | 4 (12) | {6,7,8,9,10,11} | $\bar{k}_{TC}, \bar{k}_{TC}+2, \bar{k}_{TC}, \bar{k}_{TC}+2$ |
| 4 | 8 (6) | - | $\bar{k}_{TC}, \bar{k}_{TC}+4, \bar{k}_{TC}, \bar{k}_{TC}+4$ |

FIG. 12

Port #0  Port #1  Port #2  Port #3

EP 4 503 697 A1

FIG. 13

FIG. 14

## FIG. 15A

| $N_{ap}^{SRS}$ | $K_{TC}(n_{SRS}^{CS,max})$ | $n_{SRS}^{CS,i}$ |
|---|---|---|
| 6 | 2 (8) | $n_{SRS}^{CS}, (n_{SRS}^{CS} + 2)\ mod\ 8, (n_{SRS}^{CS} + 4)\ mod\ 8, (n_{SRS}^{CS} + 6)\ mod\ 8$ |
| 6 | 4 (12) | $n_{SRS}^{CS}, (n_{SRS}^{CS} + 2)\ mod\ 12, (n_{SRS}^{CS} + 4)\ mod\ 12, (n_{SRS}^{CS} + 6)\ mod\ 12, (n_{SRS}^{CS} + 8)\ mod\ 12, (n_{SRS}^{CS} + 10)\ mod\ 12$ |
| 6 | 8 (6) | $n_{SRS}^{CS}, (n_{SRS}^{CS} + 1)\ mod\ 6, (n_{SRS}^{CS} + 2)\ mod\ 6, (n_{SRS}^{CS} + 3)\ mod\ 6, (n_{SRS}^{CS} + 4)\ mod\ 6, (n_{SRS}^{CS} + 5)\ mod\ 6$ |

## FIG. 15B

(a) Port#0-#5

(b) Port#0-#2, Port#3-#5

(c) Port#0-#2, Port#3-#5

FREQUENCY

TIME

# FIG. 16A

| $N_{ap}^{SRS}$ | $K_{TC}(n_{SRS}^{CS,max})$ | $n_{SRS}^{CS,i}$ |
|---|---|---|
| 8 | 2 (8) | $n_{SRS}^{CS}, (n_{SRS}^{CS} + 1) \bmod 8, (n_{SRS}^{CS} + 2) \bmod 8, (n_{SRS}^{CS} + 3) \bmod 8, (n_{SRS}^{CS} + 4) \bmod 8, (n_{SRS}^{CS} + 5) \bmod 8, (n_{SRS}^{CS} + 6) \bmod 8, (n_{SRS}^{CS} + 7) \bmod 8,$ |
| 8 | 4 (12) | $n_{SRS}^{CS}, (n_{SRS}^{CS} + 3) \bmod 12, (n_{SRS}^{CS} + 6) \bmod 12, (n_{SRS}^{CS} + 9) \bmod 12$ |
| 8 | 8 (6) | $n_{SRS}^{CS}, n_{SRS}^{CS}, (n_{SRS}^{CS} + 3) \bmod 6, (n_{SRS}^{CS} + 3) \bmod 6$ |

# FIG. 16B

(a) Port#0-#7

(b) Port#0-#3, Port#4-#7

(c) Port#0-#3, Port#4-#7

(d) Port#0-#1, Port#2-#3, Port#4-#5, Port#6-#7

FREQUENCY

TIME

EP 4 503 697 A1

| $N_{ap}^{SRS}$ | $K_{TC}(n_{SRS}^{CS,max})$ | $n_{SRS}^{CS,i}$ |
|---|---|---|
| 6 | 2 (~~8~~6) | $n_{SRS}^{CS}, (n_{SRS}^{CS}+1) \bmod 6, (n_{SRS}^{CS}+2) \bmod 6, (n_{SRS}^{CS}+3) \bmod 6, (n_{SRS}^{CS}+4) \bmod 6, (n_{SRS}^{CS}+5) \bmod 6$ |
| 8 | 4 (~~1~~28) | $n_{SRS}^{CS}, (n_{SRS}^{CS}+1) \bmod 8, (n_{SRS}^{CS}+2) \bmod 8, (n_{SRS}^{CS}+3) \bmod 8, (n_{SRS}^{CS}+4) \bmod 8, (n_{SRS}^{CS}+5) \bmod 8, (n_{SRS}^{CS}+6) \bmod 8, (n_{SRS}^{CS}+7) \bmod 8,$ |
| 8 | 8 (~~6~~8) | $n_{SRS}^{CS}, (n_{SRS}^{CS}+1) \bmod 8, (n_{SRS}^{CS}+2) \bmod 8, (n_{SRS}^{CS}+3) \bmod 8, (n_{SRS}^{CS}+4) \bmod 8, (n_{SRS}^{CS}+5) \bmod 8, (n_{SRS}^{CS}+6) \bmod 8, (n_{SRS}^{CS}+7) \bmod 8,$ |

FIG. 17

| $N_{ap}^{SRS}$ | $K_{TC}$ ($n_{SRS}^{CS,max}$) | $n_{SRS}^{CS,i}$ (in order) |
|---|---|---|
| 8 | 2 (8) | $n_{SRS}^{CS}$, $(n_{SRS}^{CS} + 2)\ mod\ 8$, $(n_{SRS}^{CS} + 4)\ mod\ 8$, $(n_{SRS}^{CS} + 6)\ mod\ 8$, $(n_{SRS}^{CS} + 1)\ mod\ 8$, $(n_{SRS}^{CS} + 3)\ mod\ 8$, $(n_{SRS}^{CS} + 5)\ mod\ 8$, $(n_{SRS}^{CS} + 7)\ mod\ 8$, |

FIG. 18

| $N_{ap}^{SRS}$ | $K_{TC}(n_{SRS}^{CS,max})$ | X | $n_{SRS}^{CS,i}$ (in order) |
|---|---|---|---|
| 6 | 2 (6) | e.g. 3 | $n_{SRS}^{CS}, (n_{SRS}^{CS}+3) \bmod 6, n_{SRS}^{CS}, (n_{SRS}^{CS}+3) \bmod 6, n_{SRS}^{CS}, (n_{SRS}^{CS}+3) \bmod 6, n_{SRS}^{CS}, (n_{SRS}^{CS}+3) \bmod 6,$ |
| 8 | 2 (8) | e.g. 4 | $n_{SRS}^{CS}, (n_{SRS}^{CS}+4) \bmod 8, n_{SRS}^{CS}, (n_{SRS}^{CS}+4) \bmod 8, n_{SRS}^{CS}, (n_{SRS}^{CS}+4) \bmod 8, n_{SRS}^{CS}, (n_{SRS}^{CS}+4) \bmod 8,$ |

FIG. 19

| $N_{ap}^{SRS}$ | $K_{TC}(n_{SRS}^{CS,max})$ | X | $n_{SRS}^{CS,i}$ (in order) |
|---|---|---|---|
| 8 | 2 (8) | e.g. 4 | $n_{SRS}^{CS}, (n_{SRS}^{CS} + 4) \bmod 8, (n_{SRS}^{CS} + 1) \bmod 8, (n_{SRS}^{CS} + 5) \bmod 8, (n_{SRS}^{CS} + 2) \bmod 8, (n_{SRS}^{CS} + 6) \bmod 8, (n_{SRS}^{CS} + 3) \bmod 8, (n_{SRS}^{CS} + 7) \bmod 8$ |

FIG. 20

FIG. 21

FIG. 22

FIG. 23

Port #0

Port #1

Port #2

Port #3

Port #4

Port #5

Port #6

Port #7

EP 4 503 697 A1

FIG. 24

FIG. 25

FIG. 26

FIG. 27

Port #0　　Port #1　　Port #2　　Port #3

Port #4　　Port #5　　Port #6　　Port #7

EP 4 503 697 A1

# FIG. 28

Port #0  $w_t(0), w_t(1)$  Port #1  $w_t(0), w_t(1)$  Port #2  $w_t(0), w_t(1)$  Port #3  $w_t(0), w_t(1)$

Port #4  $w_t(0), w_t(1)$  Port #5  $w_t(0), w_t(1)$  Port #6  $w_t(0), w_t(1)$  Port #7  $w_t(0), w_t(1)$

EP 4 503 697 A1

## FIG. 29A

| OCC index | $w_t(0)$ | $w_t(1)$ |
|:---:|:---:|:---:|
| 0 | exp(j0·0) (or +1) | exp(j0·2) (or +1) |
| 1 | exp(jπ·0) (or +1) | exp(jπ·2) (or -1) |

## FIG. 29B

FIG. 30

FIG. 31

EP 4 503 697 A1

FIG. 32

EP 4 503 697 A1

BASE STATION 10, USER TERMINAL 20

1001

PROCESSOR

1007

1004

COMMUNICATION APPARATUS

1002

MEMORY

1005

INPUT APPARATUS

1003

STORAGE

1006

OUTPUT APPARATUS

FIG. 33

FIG. 34

40

47
46
52
51 ROTATIONAL SPEED SENSOR
53 VEHICLE SPEED SENSOR
54 ACCELERATION SENSOR
48
42
45
57
41 DRIVING SECTION
50
43
44
55
56
52
59 INFORMATION SERVICE SECTION
49 ELECTRONIC CONTROL SECTION
64 DRIVING ASSISTANCE SYSTEM SECTION
61 MICRO-PROCESSOR
62 MEMORY
63 COMMUNI-CATION PORT
58
60 COMMUNICATION MODULE

<table>
<tr><td colspan="2">INTERNATIONAL SEARCH REPORT</td><td colspan="2">International application No.<br><br>**PCT/JP2022/016045**</td></tr>
</table>

**A. CLASSIFICATION OF SUBJECT MATTER**

*H04W 16/28*(2009.01)i; *H04W 72/04*(2009.01)i
FI:  H04W16/28 130; H04W72/04 136

According to International Patent Classification (IPC) or to both national classification and IPC

**B. FIELDS SEARCHED**

Minimum documentation searched (classification system followed by classification symbols)

H04B7/24-7/26; H04W4/00-99/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | ZTE. Initial views on Rel-18 MIMO evolution. 3GPP TSG RAN WG1 Meeting #108-e R1-2201192. 14 February 2022<br>        clause 2.5 | 1-3, 5-6 |
| A | | 4 |
| Y | ERICSSON. Introduction of MIMO enhancements. 3GPP TSG-WG1 Meeting #107 R1-2112919. 08 December 2021<br>        clause 6.4.1.4.1, 6.4.1.4.2 | 1-3, 5-6 |
| A | | 4 |
| A | US 2022/0029861 A1 (SAMSUNG ELECTRONICS CO., LTD.) 27 January 2022 (2022-01-27)<br>        entire text | 1-6 |
| A | JP 2020-511047 A (QUALCOMM INCORPORATED) 09 April 2020 (2020-04-09)<br>        entire text | 1-6 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2022** | **27 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/016045**

| Patent document cited in search report | | | Publication date (day/month/year) | Patent family member(s) | | | Publication date (day/month/year) |
|---|---|---|---|---|---|---|---|
| US | 2022/0029861 | A1 | 27 January 2022 | EP | 3945689 | A1 | |
| | | | | entire text | | | |
| | | | | CN | 113992310 | A | |
| | | | | KR | 10-2022-0013908 | A | |
| | | | | TW | 202205905 | A | |
| JP | 2020-511047 | A | 09 April 2020 | US | 2018/0241446 | A1 | |
| | | | | entire text | | | |
| | | | | EP | 3586448 | A1 | |
| | | | | TW | 201838457 | A | |
| | | | | CA | 3049691 | A1 | |
| | | | | CN | 110366826 | A | |
| | | | | KR | 10-2019-0117538 | A | |
| | | | | BR | 112019017262 | A2 | |

Form PCT/ISA/210 (patent family annex) (January 2015)